# EUROPEAN PATENT APPLICATION

(11) **EP 4 734 638 A1**
(43) Date of publication of application: **29.04.2026**
(21) Application number: 24838631.0
(22) Date of filing: 01.07.2024
(51) Int. Cl.: H04W 72/1268, H04W 72/12, H04W 24/02

(54) **COMMUNICATION METHOD AND RELATED DEVICE**

(30) Priority: 10.07.2023 CN 202310841434
(71) Applicant: Huawei Technologies Co., Ltd., Shenzhen, Guangdong 518129 (CN)
(72) Inventor: JIANG, Xin, Shenzhen, Guangdong 518129 (CN)
(74) Representative: Thun, Clemens
(86) International application number: PCT/CN2024/102852
(87) International publication number: WO 2025/011376

(57) **Abstract**

This application provides a communication method and a related device, to implement uplink coordinative processing of a first terminal device in a serving cell and a coordinating cell. In the method, a first unit receives uplink data of the first terminal device, where at least one coordinating cell of the first terminal device corresponds to the first unit, and a serving cell of the first terminal device corresponds to a second unit; and sends first data through a link between the first unit and the second unit, where the first data is data obtained by performing first physical layer processing on the uplink data of the first terminal device.

## Description

This application claims priority to Chinese Patent Application No. 202310841434.3, filed with the China National Intellectual Property Administration on July 10, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Wireless communication may be transmission and communication performed between a plurality of communication nodes without propagation through a conductor or a cable. Usually, a network device and a terminal device may be used as different communication nodes, to perform communication in a wireless communication manner. One network device may include one or more cells. When the terminal device is located in a signal coverage area of two or more cells, the two or more cells may perform coordinative processing on a signal of the terminal device, to obtain a signal gain (for example, a signal combining gain and/or a signal diversity gain).

Currently, in a communication system, the network device may be deployed in a distributed manner. For example, functional entities in the network device that are configured to process signals are split, where some of the functional entities are carried on a specific device and the other functional entities are carried on another device, to improve a coverage capability and deployment flexibility of the network device.

However, how to perform the coordinative processing on the signal of the terminal device between different functional entities in the network device is an urgent technical problem to be resolved.

### SUMMARY

This application provides a communication method and a related device, to implement uplink coordinative processing of a first terminal device in a serving cell and a coordinating cell.

A first aspect of this application provides a communication method. The method is applied to a first unit, and the method is performed by the first unit, or the method is performed by some components (for example, a processor, a chip, or a chip system) in the first unit, or the method may be further implemented by a logical module or software that can implement all or some functions of the first unit. In the first aspect and possible implementations of the first aspect, an example in which the method is performed by the first unit is used for description. In the method, the first unit receives uplink data of the first terminal device, where at least one coordinating cell of the first terminal device corresponds to the first unit, and a serving cell of the first terminal device corresponds to a second unit; and the first unit sends first data through a link between the first unit and the second unit, where the first data is data obtained by performing first physical layer processing on the uplink data of the first terminal device.

Based on the foregoing technical solution, the first unit is a unit in which the at least one coordinating cell of the first terminal device is located, and the second unit is a unit in which the serving cell of the first terminal device is located. After the first unit receives the uplink data of the first terminal device, the first unit may send the first data to the second unit on the link between the first unit and the second unit. Therefore, after a network device performs functional entity division in different function division manners, when some physical layer processing (for example, first physical layer processing) functions in the network device are set in the first unit (and/or the second unit), the first data sent by the first unit to the second unit through the link between the first unit and the second unit is data obtained by performing the first physical layer processing on the uplink data of the first terminal device, that is, the first data is used as coordinating data. In the foregoing implementation solution, transmission of the coordinating data between the first unit and the second unit is enabled. The second unit may subsequently perform other physical layer processing based on the first data, to implement the uplink coordinative processing of the first terminal device in the serving cell and the coordinating cell.

It should be understood that, the first unit may be configured to receive/send signals of N (where N is a positive integer) cells, where the N cells include the at least one coordinating cell. Correspondingly, that the at least one coordinating cell corresponds to (or is located in) the first unit may be expressed as: The first unit includes the at least one coordinating cell, and the first unit is configured to receive/send a signal of the at least one coordinating cell, or the first unit is configured to provide a network service of the at least one coordinating cell. Similarly, the second unit may be configured to receive/send signals of M (where M is a positive integer) cells, where the M cells include the serving cell. Correspondingly, that the serving cell corresponds to (or is located in) the second unit may be expressed as: The second unit includes the serving cell, and the second unit is configured to receive/send a signal of the serving cell, or the second unit is configured to provide a network service of the serving cell.

It should be understood that, in this application, the first unit may be a network device that has at least the first physical layer processing, and the first unit may further have another physical layer processing (for example, second physical layer processing mentioned below) function. Similarly, the second unit may be a network device that has at least the second physical layer processing function, and the second unit may further have another physical layer processing (for example, first physical layer processing) function.

Optionally, the first unit (and/or the second unit) may further have a radio frequency signal processing function. For example, the radio frequency signal processing function may be used for one or both of analog (beamforming, BF) processing and analog-to-digital (analog-to-digital, AD) conversion processing. When the first unit (and/or the second unit) has the radio frequency signal processing function, the first unit (and/or the second unit) may receive data of a terminal device on an air interface through a module of the radio frequency signal processing function, that is, the first unit (and/or the second unit) may locally perform radio frequency signal processing. When the first unit (and/or the second unit) has the radio frequency signal processing function, the first unit (and/or the second unit) may receive data from a terminal device of the radio frequency module. That is, the first unit (and/or the second unit) may not need to locally perform the foregoing radio frequency signal processing.

In a possible implementation of the first aspect, the first physical layer processing includes at least one of fast Fourier transform (fast Fourier transform, FFT) processing and cyclic prefix (cyclic prefix, CP) removal processing.

Based on the foregoing technical solution, the first physical layer processing performed by the first unit on the uplink data of the first terminal device may specifically include at least one of the foregoing, so that the second unit does not need to perform the foregoing FFT processing and/or CP removal processing.

In a possible implementation of the first aspect, the first physical layer processing does not include digital beamforming processing.

Based on the foregoing technical solution, through the digital beamforming processing, data having an antenna feature can be processed into data having a beam feature, that is, through the digital beamforming processing, antenna-level data can be processed into beam-level data. Compared with the beam-level data, the antenna-level data has more signal features. When the first physical layer processing does not include the digital beamforming processing, the first unit sends the antenna-level data instead of the beam-level data to the second unit, so that the second unit can perform the uplink coordinative processing based on the antenna-level data having more signal features, to improve performance of the uplink coordinative processing.

In a possible implementation of the first aspect, before the sending the first data, the method further includes: The first unit receives first information, where the first information includes at least one of an identifier of the at least one coordinating cell, an identifier of the serving cell, and first indication information, and the first indication information indicates that a cell coordination type of the at least one coordinating cell is a coordinating cell.

Based on the foregoing technical solution, the first unit may further receive the first information, so that the first unit can determine, based on the first information, information about a coordinating group to which the at least one coordinating cell and the serving cell belong, and subsequently can communicate with the first terminal device/second unit based on the information about the coordinating group.

Optionally, for the first unit, the first information may be received through a direct link between the first unit and a DU connected to the first unit, or the first information may be received through a link of another device between the first unit and a DU connected to the first unit. The another device may be another unit (for example, the second unit or a third unit that appears below), a switch, or the like.

In a possible implementation of the first aspect, the first information further includes information about another coordinating cell.

Optionally, the information about the another coordinating cell may include an identifier of the another coordinating cell, a coordination type of the another coordinating cell, a communication address of the another coordinating cell, a communication address of a unit in which the another coordinating cell is located, and the like.

Based on the foregoing technical solution, the first information received by the first unit may include information about the at least one coordinating cell in the first unit and information about the serving cell, and may further include information about another coordinating cell in another unit other than the first unit and the second unit. In this way, when there is no direct communication link between the first unit and the second unit, the first unit and the second unit can communicate with each other through forwarding by the unit in which the another coordinating cell is located.

In a possible implementation of the first aspect, before that the first unit sends the first data, the method further includes: The first unit sends the first information through the link between the first unit and the second unit.

Based on the foregoing technical solution, after the first unit receives the first information, the first unit may further send the first information to the second unit on the link between the first unit and the second unit, so that the second unit can determine the information about the coordinating cell in the first unit based on the first information, and subsequently can communicate with the first unit based on the information about the coordinating cell.

In a possible implementation of the first aspect, the first information is sent to another unit in which the another coordinating cell is located.

Based on the foregoing technical solution, after the first unit receives the first information, the first unit may further send the first information to the another unit in which the another coordinating cell is located, so that the another unit can determine the information about the coordinating cell in the first unit based on the first information, and subsequently can communicate with the first unit based on the information about the coordinating cell.

In a possible implementation of the first aspect, before that the first unit sends the first data, the method further includes: The first unit receives second information through the link between the first unit and the second unit, where the second information includes at least one of an identifier of a coordinating cell of the first terminal device, the identifier of the serving cell, and second indication information, and the second indication information indicates that a cell coordination type of the serving cell is a serving cell.

Based on the foregoing technical solution, the first unit may further receive the second information, so that the first unit can determine, based on the second information, information about a coordinating group to which the at least one coordinating cell and the serving cell belong, and subsequently can communicate with the first terminal device/second unit based on the information about the coordinating group.

In a possible implementation of the first aspect, the method further includes: The first unit sends or receives a negotiation message through the link between the first unit and the second unit (or between the first unit and the another unit), where the negotiation message includes at least one of capability information, vendor information, security check information, and encryption information.

Based on the foregoing technical solution, the first unit and the second unit (or the another unit) may further exchange the negotiation message, so that different units can perform negotiation based on the negotiation message, to improve communication efficiency or improve communication security.

Optionally, the negotiation message is preconfigured in the first unit or the second unit or the another unit (for example, a third unit that may exist).

In a possible implementation of the first aspect, before that the first unit sends the first data, the method further includes: The first unit sends third information through a link between the first unit and a distributed unit, where the third information includes an identifier of the first unit and/or a communication address of the first unit.

Based on the foregoing technical solution, the first unit may further send the third information to the distributed unit on the link between the first unit and the distributed unit, where the third information includes the identifier of the first unit and/or the communication address of the first unit, so that the distributed unit can perform communication based on the third information. For example, the distributed unit can determine or plan coordinating cell group information based on the third information, or the distributed unit can release/announce the third information to the another unit.

Optionally, the third information is preconfigured in the distributed unit and/or the another unit (for example, the second unit, and the third unit that may appear below).

In a possible implementation of the first aspect, before that the first unit sends the first data, the method further includes: The first unit receives fourth information through the link between the first unit and the distributed unit, where the fourth information includes an identifier of the second unit and/or a communication address of the second unit.

Based on the foregoing technical solution, the first unit may further receive, on the link between the first unit and the distributed unit, the fourth information sent by the distributed unit, where the fourth information includes the identifier of the second unit and/or the communication address of the second unit, so that the first unit can communicate with the second unit based on the fourth information.

Optionally, the fourth information is preconfigured in the distributed unit and/or the another unit (for example, the first unit, and the third unit that may appear below).

In a possible implementation of the first aspect, the first unit and the second unit are connected in a cascading manner.

Based on the foregoing technical solution, the first unit and the second unit (and the another unit that may exist) may be connected in the cascading manner, so that different units can communicate with each other in the cascading manner.

In a possible implementation of the first aspect, the first unit and the second unit are connected through a switch, and the switch is configured to forward data on which the first physical layer processing is performed.

It may be understood that, the data on which the first physical layer processing is performed includes the first data obtained by performing the first physical layer processing on the data of the first terminal device by the first unit, or may include data obtained by performing the first physical layer processing on data of a terminal device by the another unit (for example, the second unit).

Based on the foregoing technical solution, the first unit and the second unit (and the another unit that may exist) may be connected through the switch, so that different units can communicate with each other through routing and forwarding by the switch.

Optionally, a data format of communication between the first unit (or the second unit or the another unit that may exist) and the switch may be an Ethernet format.

Optionally, when communication is not performed through the switch, a data format of communication between different units (for example, any two or more units in the first unit, the second unit, the distributed unit, or the another unit that may exist) may be a CPRI format, a CPRI-like format, a private format, or the like.

Optionally, the switch may be replaced with a physical device/virtual device having a routing function, for example, a router, a virtual machine, or a container.

In a possible implementation of the first aspect, the method further includes: The first unit receives uplink data of a second terminal device, where a serving cell of the second terminal device corresponds to (or is located in) the first unit; and the first unit sends second data through the link between the first unit and the distributed unit, where the second data is data obtained by performing the first physical layer processing and second physical layer processing on the uplink data of the second terminal device, and the second physical layer processing includes digital beamforming processing.

Based on the foregoing technical solution, the first unit may include coordinating cells in which some terminal devices (for example, the first terminal device) are located, or may include serving cells in which some terminal devices (for example, the second terminal device) are located. Correspondingly, different from a process in which the first unit processes the uplink data of the first terminal device, after the first unit receives the uplink data of the second terminal device, the first unit may send, to the distributed unit, the data obtained by performing the first physical layer processing and the second physical layer processing on the uplink data of the second terminal device.

A second aspect of this application provides a communication method. The method is applied to a second unit, and the method is performed by the second unit, or the method is performed by some components (for example, a processor, a chip, or a chip system) in the second unit, or the method may be further implemented by a logical module or software that can implement all or some functions of the second unit. In the second aspect and possible implementations of the second aspect, an example in which the method is performed by the second unit is used for description. In the method, the second unit receives first data through a link between a first unit and the second unit, where the first data is data obtained by performing first physical layer processing on uplink data of a first terminal device, at least one coordinating cell of the first terminal device corresponds to (or is located in) the first unit, and a serving cell of the first terminal device corresponds to (or is located in) the second unit; and the second unit sends third data to a distributed unit, where the third data is obtained by performing second physical layer processing on the first data.

Based on the foregoing technical solution, the first unit is a unit in which at least one coordinating cell of the first terminal device is located, and the second unit is a unit in which the serving cell of the first terminal device is located. On the link between the first unit and the second unit, the first data received by the second unit is the data obtained by performing the first physical layer processing on the uplink data of the first terminal device. Then, after the second unit performs the second physical layer processing based on the first data to obtain the third data, the second unit sends the third data to the distributed unit, to implement uplink coordinative processing of the first terminal device. Therefore, after a network device performs functional entity division in different function division manners, when some physical layer processing (for example, first physical layer processing) functions in the network device are set in the first unit (and/or the second unit), the first data sent by the first unit to the second unit through the link between the first unit and the second unit is the data obtained by performing the first physical layer processing on the uplink data of the first terminal device, that is, the first data is used as coordinating data. In the foregoing implementation solution, transmission of the coordinating data between the first unit and the second unit is enabled. The second unit may subsequently perform the second physical layer processing based on the first data, to implement the uplink coordinative processing of the first terminal device in the serving cell and the coordinating cell.

It should be understood that, the first unit may be configured to receive/send signals of N (where N is a positive integer) cells, where the N cells include the at least one coordinating cell. Correspondingly, that the at least one coordinating cell corresponds to (or is located in) the first unit may be expressed as: The first unit includes the at least one coordinating cell, and the first unit is configured to receive/send a signal of the at least one coordinating cell, or the first unit is configured to provide a network service of the at least one coordinating cell. Similarly, the second unit may be configured to receive/send signals of M (where M is a positive integer) cells, where the M cells include the serving cell. Correspondingly, that the serving cell corresponds to (or is located in) the second unit may be expressed as: The second unit includes the serving cell, and the second unit is configured to receive/send a signal of the serving cell, or the second unit is configured to provide a network service of the serving cell.

It should be understood that, in this application, the first unit may be a network device that has at least the first physical layer processing, and the first unit may further have another physical layer processing (for example, second physical layer processing) function. Similarly, the second unit may be a network device that has at least the second physical layer processing, and the second unit may further have another physical layer processing (for example, first physical layer processing) function.

In a possible implementation of the second aspect, the second physical layer processing includes digital beamforming processing; or the second physical layer processing includes digital beamforming processing and at least one of the following: decoding, de-rate matching, descrambling, demodulation, inverse discrete Fourier transform, channel equalization, and resource element demapping.

Based on the foregoing technical solution, through the digital beamforming processing, data having an antenna feature can be processed into data having a beam feature, that is, through the digital beamforming processing, antenna-level data can be processed into beam-level data. Compared with the beam-level data, the antenna-level data has more signal features. When the second physical layer processing includes the digital beamforming processing, the second unit can perform uplink coordinative processing based on the antenna-level data having more signal features, to improve performance of the uplink coordinative processing.

In a possible implementation of the second aspect, the first physical layer processing includes at least one of fast Fourier transform processing and cyclic prefix removal processing.

Based on the foregoing technical solution, the first physical layer processing performed by the first unit on the uplink data of the first terminal device may specifically include at least one of the foregoing, so that the second unit does not need to perform the foregoing FFT processing and/or CP removal processing.

In a possible implementation of the second aspect, the first physical layer processing does not include digital beamforming processing.

Based on the foregoing technical solution, when the first physical layer processing does not include the digital beamforming processing, the first unit sends the antenna-level data instead of the beam-level data to the second unit, so that the second unit can perform the uplink coordinative processing based on the antenna-level data having more signal features, to improve performance of the uplink coordinative processing.

In a possible implementation of the second aspect, before that the second unit receives the first data, the method further includes: The second unit receives first information through the link between the first unit and the second unit, where the first information includes at least one of an identifier of the at least one coordinating cell, an identifier of the serving cell, and first indication information, and the first indication information indicates that a cell coordination type of the at least one coordinating cell is a coordinating cell.

Based on the foregoing technical solution, the second unit may further receive the first information from the first unit on the link between the first unit and the second unit, so that the second unit can determine information about the coordinating cell in the first unit based on the first information, and subsequently can communicate with the first unit based on the information about the coordinating cell.

In a possible implementation of the second aspect, the first information further includes information about another coordinating cell.

Optionally, the information about the another coordinating cell may include an identifier of the another coordinating cell, a coordination type of the another coordinating cell, a communication address of the another coordinating cell, a communication address of a unit in which the another coordinating cell is located, and the like.

Based on the foregoing technical solution, the first information received by the second unit may include information about the at least one coordinating cell in the first unit and information about the serving cell, and may further include information about another coordinating cell in another unit other than the first unit and the second unit. In this way, when there is no direct communication link between the first unit and the second unit, the first unit and the second unit can communicate with each other through forwarding by the unit in which the another coordinating cell is located.

In a possible implementation of the second aspect, before that the second unit receives the first data, the method further includes: The second unit receives second information, where the second information includes at least one of an identifier of a coordinating cell of the first terminal device, the identifier of the serving cell, and second indication information, and the second indication information indicates that a cell coordination type of the serving cell is a serving cell.

Based on the foregoing technical solution, the second unit may further receive the second information, so that the second unit can determine, based on the second information, information about a coordinating group to which the at least one coordinating cell and the serving cell belong, and subsequently can communicate with the first terminal device/first unit based on the information about the coordinating group.

Optionally, for the second unit, the second information may be received through a direct link between the second unit and a DU connected to the second unit, or the second information may be received through a link of another device between the second unit and a DU connected to the second unit. The another device may be another unit (for example, the first unit or a third unit that appears below), a switch, or the like.

In a possible implementation of the second aspect, the second information further includes information about another coordinating cell.

Optionally, the information about the another coordinating cell may include an identifier of the another coordinating cell, a coordination type of the another coordinating cell, a communication address of the another coordinating cell, a communication address of a unit in which the another coordinating cell is located, and the like.

Based on the foregoing technical solution, the second information received by the second unit may include information about the at least one coordinating cell in the first unit and information about the serving cell, and may further include information about another coordinating cell in another unit other than the first unit and the second unit. In this way, when there is no direct communication link between the first unit and the second unit, the first unit and the second unit can communicate with each other through forwarding by the unit in which the another coordinating cell is located.

In a possible implementation of the second aspect, before that the second unit receives the first data, the method further includes: The second unit sends the second information through the link between the first unit and the second unit.

Based on the foregoing technical solution, the second unit may further send the second information on the link between the first unit and the second unit, so that the first unit can determine, based on the second information, information about a coordinating group to which the at least one coordinating cell and the serving cell belong, and subsequently can communicate with the first terminal device/second unit based on the information about the coordinating group.

In a possible implementation of the second aspect, the method further includes: The second unit sends or receives a negotiation message through the link between the first unit and the second unit, where the negotiation message includes at least one of capability information, vendor information, security check information, and encryption information.

Based on the foregoing technical solution, the first unit and the second unit (or the another unit) may further exchange the negotiation message, so that different units can perform negotiation based on the negotiation message, to improve communication efficiency or improve communication security.

Optionally, the negotiation message is preconfigured in the first unit or the second unit or the another unit (for example, a third unit that may exist).

In a possible implementation of the second aspect, before that the second unit receives the first data, the method further includes: The second unit sends fourth information through a link between the second unit and the distributed unit, where the fourth information indicates communication information of the second unit, and the communication information includes an identifier of the second unit and/or a communication address of the second unit.

Based on the foregoing technical solution, the second unit may further send the fourth information to the distributed unit on the link between the second unit and the distributed unit, where the fourth information includes the identifier of the second unit and/or the communication address of the second unit, so that the distributed unit can perform communication based on the fourth information. For example, the distributed unit can determine or plan coordinating cell group information based on the fourth information, or the distributed unit can release/announce the fourth information to the another unit.

Optionally, the fourth information is preconfigured in the distributed unit and/or the another unit (for example, the second unit, and the third unit that may appear below).

In a possible implementation of the second aspect, before that the second unit receives the first data, the method further includes: The second unit receives third information through the link between the first unit and the second unit, where the third information includes an identifier of the first unit and/or a communication address of the first unit.

Based on the foregoing technical solution, the second unit may further send the third information to the distributed unit on the link between the second unit and the distributed unit, where the third information includes the identifier of the first unit and/or the communication address of the first unit, so that the distributed unit can perform communication based on the third information. For example, the distributed unit can determine or plan coordinating cell group information based on the third information, or the distributed unit can release/announce the third information to the another unit.

Optionally, the third information is preconfigured in the distributed unit and/or the another unit (for example, the second unit, and the third unit that may appear below).

In a possible implementation of the second aspect, the first unit and the second unit are connected in a cascading manner.

Based on the foregoing technical solution, the first unit and the second unit (and the another unit that may exist) may be connected in the cascading manner, so that different units can communicate with each other in the cascading manner.

In a possible implementation of the second aspect, the first unit and the second unit are connected through a switch, and the switch is configured to forward data on which first physical layer processing is performed.

It may be understood that, the data on which the first physical layer processing is performed includes the first data obtained by performing the first physical layer processing on the data of the first terminal device by the first unit, or may include data obtained by performing the first physical layer processing on data of a terminal device by the another unit (for example, the second unit).

Based on the foregoing technical solution, the first unit and the second unit (and the another unit that may exist) may be connected through the switch, so that different units can communicate with each other through routing and forwarding by the switch.

Optionally, a data format of communication between the first unit (or the second unit or the another unit that may exist) and the switch may be an Ethernet format.

Optionally, the switch may be replaced with a physical device/virtual device having a routing function, for example, a router, a virtual machine, or a container.

In a possible implementation of the second aspect, the method further includes: The second unit receives uplink data of a third terminal device; and the second unit sends fourth data through the link between the second unit and the distributed unit, where the fourth data is data obtained by performing the first physical layer processing and the second physical layer processing on the uplink data of the third terminal device.

Based on the foregoing technical solution, the second unit may include coordinating cells in which some terminal devices are located, or may include serving cells in which some terminal devices (for example, the first terminal device) are located. Correspondingly, different from a process in which the second unit processes the uplink data of the first terminal device, after the second unit receives the uplink data of the third terminal device, the second unit may send, to the distributed unit, the data obtained by performing the first physical layer processing and the second physical layer on the uplink data of the third terminal device.

A third aspect of this application provides a communication apparatus. The communication apparatus can implement the method according to the first aspect or the possible implementations of the first aspect. The communication apparatus includes a corresponding unit or module configured to perform the foregoing method. The unit or the module included in the communication apparatus may be implemented by software and/or hardware. For example, the apparatus may be a first unit; or the apparatus may be a component (for example, a processor, a chip, or a chip system) in a first unit; or the apparatus may be further a logical module or software that can implement all or some functions of a first unit.

The communication apparatus includes a processing module and a transceiver module. The transceiver module is configured to receive uplink data of a first terminal device, where at least one coordinating cell of the first terminal device corresponds to (or is located in) the first unit, and a serving cell of the first terminal device corresponds to (or is located in) a second unit. The processing module is configured to determine first data. The transceiver module is further configured to send the first data through a link between the first unit and the second unit, where the first data is data obtained by performing first physical layer processing on the uplink data of the first terminal device.

In a possible implementation of the third aspect, the first physical layer processing includes at least one of fast Fourier transform processing and cyclic prefix removal processing.

In a possible implementation of the third aspect, the first physical layer processing does not include digital beamforming processing.

In a possible implementation of the third aspect, the transceiver module is further configured to receive first information, where the first information includes at least one of an identifier of the at least one coordinating cell, an identifier of the serving cell, and first indication information, and the first indication information indicates that a cell coordination type of the at least one coordinating cell is a coordinating cell.

In a possible implementation of the third aspect, the first information further includes information about another coordinating cell.

In a possible implementation of the third aspect, the transceiver module is further configured to send the first information through the link between the first unit and the second unit
In a possible implementation of the third aspect, the transceiver module is further configured to receive second information through the link between the first unit and the second unit, where the second information includes at least one of an identifier of a coordinating cell of the first terminal device, the identifier of the serving cell, and second indication information, and the second indication information indicates that a cell coordination type of the serving cell is a serving cell.

In a possible implementation of the third aspect, the transceiver module is further configured to send or receive a negotiation message through the link between the first unit and the second unit, where the negotiation message includes at least one of capability information, vendor information, security check information, and encryption information.

In a possible implementation of the third aspect, the transceiver module is further configured to send third information through a link between the first unit and a distributed unit, where the third information includes an identifier of the first unit and/or a communication address of the first unit.

In a possible implementation of the third aspect, the transceiver module is further configured to receive fourth information through the link between the first unit and the distributed unit, where the fourth information includes an identifier of the second unit and/or a communication address of the second unit.

In a possible implementation of the third aspect, the first unit and the second unit are connected in a cascading manner.

In a possible implementation of the third aspect, the first unit and the second unit are connected through a switch, and the switch is configured to forward data on which first physical layer processing is performed.

In a possible implementation of the third aspect, the transceiver module is further configured to receive uplink data of a second terminal device, where a serving cell of the second terminal device corresponds to (or is located in) the first unit; and the transceiver module is further configured to send second data through the link between the first unit and the distributed unit, where the second data is data obtained by performing the first physical layer processing and second physical layer processing on the uplink data of the second terminal device, and the second physical layer processing includes digital beamforming processing.

In the third aspect, the processing module and the transceiver module may be further configured to perform the steps performed in the possible implementations of the first aspect, and implement corresponding technical effects. For details, refer to the first aspect. Details are not described herein again.

A fourth aspect of this application provides a communication apparatus. The communication apparatus can implement the method according to the second aspect or the possible implementations of the second aspect. The communication apparatus includes a corresponding unit or module configured to perform the foregoing method. The unit or the module included in the communication apparatus may be implemented by software and/or hardware. For example, the apparatus may be a second unit; or the apparatus may be a component (for example, a processor, a chip, or a chip system) in a second unit; or the apparatus may be further a logical module or software that can implement all or some functions of a second unit.

The communication apparatus includes a processing module and a transceiver module. The transceiver module is configured to receive first data through a link between a first unit and a second unit, where the first data is data obtained by performing first physical layer processing on uplink data of a first terminal device, where at least one coordinating cell of the first terminal device corresponds to (or is located in) the first unit, and a serving cell of the first terminal device corresponds to (or is located in) the second unit. The processing module is configured to determine third data. The transceiver module is further configured to send the third data to a distributed unit, where the third data is obtained by performing second physical layer processing on the first data.

In a possible implementation of the fourth aspect, the second physical layer processing includes digital beamforming processing; or the second physical layer processing includes digital beamforming processing and at least one of the following: decoding, de-rate matching, descrambling, demodulation, inverse discrete Fourier transform, channel equalization, and resource element demapping.

In a possible implementation of the fourth aspect, the first physical layer processing includes at least one of fast Fourier transform processing and cyclic prefix removal processing.

In a possible implementation of the fourth aspect, the first physical layer processing does not include the digital beamforming processing.

In a possible implementation of the fourth aspect, the transceiver module is further configured to receive first information through the link between the first unit and the second unit, where the first information includes at least one of an identifier of the at least one coordinating cell, an identifier of the serving cell, and first indication information, and the first indication information indicates that a cell coordination type of the at least one coordinating cell is a coordinating cell.

In a possible implementation of the fourth aspect, the first information further includes information about another coordinating cell.

In a possible implementation of the fourth aspect, the transceiver module is further configured to receive second information, where the second information includes at least one of an identifier of a coordinating cell of the first terminal device, the identifier of the serving cell, and second indication information, and the second indication information indicates that a cell coordination type of the serving cell is a serving cell.

In a possible implementation of the fourth aspect, the transceiver module is further configured to send the second information through the link between the first unit and the second unit

In a possible implementation of the fourth aspect, the transceiver module is further configured to send or receive a negotiation message through the link between the first unit and the second unit, where the negotiation message includes at least one of capability information, vendor information, security check information, and encryption information.

In a possible implementation of the fourth aspect, the transceiver module is further configured to send fourth information through a link between the second unit and the distributed unit, where the fourth information indicates communication information of the second unit, and the communication information includes an identifier of the second unit and/or a communication address of the second unit.

In a possible implementation of the fourth aspect, the transceiver module is further configured to receive third information through the link between the first unit and the second unit, where the third information includes an identifier of the first unit and/or a communication address of the first unit.

In a possible implementation of the fourth aspect, the first unit and the second unit are connected in a cascading manner.

In a possible implementation of the fourth aspect, the first unit and the second unit are connected through a switch, and the switch is configured to forward data on which first physical layer processing is performed.

In a possible implementation of the fourth aspect, the transceiver module is further configured to receive uplink data of a third terminal device; and the transceiver module is further configured to send fourth data through the link between the second unit and the distributed unit, where the fourth data is data obtained by performing the first physical layer processing and the second physical layer processing on the uplink data of the third terminal device.

In the fourth aspect, the processing module and the transceiver module may be further configured to perform the steps performed in the possible implementations of the second aspect, and implement corresponding technical effects. For details, refer to the second aspect. Details are not described herein again.

A fifth aspect of this application provides a communication apparatus, including at least one processor. The at least one processor is coupled to a memory, and the processor is configured to perform the method according to the first aspect or the possible implementations of the first aspect.

For example, the memory is configured to store a program or instructions, and the at least one processor is configured to execute the program or the instructions, so that the apparatus implements the method according to the first aspect or the possible implementations of the first aspect.

A sixth aspect of this application provides a communication apparatus, including at least one processor. The at least one processor is coupled to a memory, and the processor is configured to perform the method according to the second aspect or the possible implementations of the second aspect.

For example, the memory is configured to store a program or instructions, and the at least one processor is configured to execute the program or the instructions, so that the apparatus implements the method according to the second aspect or the possible implementations of the second aspect.

A seventh aspect of this application provides a communication apparatus, including at least one logic circuit and an input/output interface. The logic circuit is configured to perform the method according to the first aspect and the possible implementations of the first aspect.

An eighth aspect of this application provides a communication apparatus, including at least one logic circuit and an input/output interface. The logic circuit is configured to perform the method according to the second aspect and the possible implementations of the second aspect.

A ninth aspect of this application provides a computer-readable storage medium. The computer-readable storage medium is configured to store one or more computer-executable instructions. When the computer-executable instructions are executed by a processor, the processor performs the method according to any one of the possible implementations of the first aspect and the second aspect.

A tenth aspect of this application provides a computer program product (also referred to as a computer program). When the computer program product is executed by a processor, the processor performs the method according to any one of the possible implementations of the first aspect and the second aspect.

An eleventh aspect of this application provides a chip system. The chip system includes at least one processor, configured to support a communication apparatus in implementing a function in any one of the possible implementations of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the communication apparatus in the fourth aspect, or the communication system includes the communication apparatus in the fifth aspect and the communication apparatus in the sixth aspect, or the communication system includes the communication apparatus in the seventh aspect and the communication apparatus in the eighth aspect.

Optionally, the communication system further includes a third unit, where one or more coordinating cells of a first terminal device correspond to (or are located in) the third unit.

Optionally, the communication system further includes a distributed unit.

Optionally, the system further includes a switch, a first unit and a second unit are connected through the switch, and the switch is configured to forward data on which first physical layer processing is performed.

For the technical effects brought by any one of the designs of the third aspect to the twelfth aspect, refer to the technical effects brought by the first aspect and the second aspect and different designs of the first aspect or the second aspect. Details are not described herein again.

### BRIEF DESCRIPTION OF DRAWINGS

FIG. 1 is a diagram of a communication system according to this application;
FIG. 2 is a diagram of a network device according to this application;
FIG. 3 is another diagram of a network device according to this application;
FIG. 4a is a diagram of a communication scenario according to this application;
FIG. 4b is another diagram of a communication scenario according to this application;
FIG. 5 is another diagram of a communication scenario according to this application;
FIG. 6a is another diagram of a communication scenario according to this application;
FIG. 6b is another diagram of a communication scenario according to this application;
FIG. 6c is another diagram of a communication scenario according to this application;
FIG. 7 is a diagram of a communication method according to this application;
FIG. 8 is another diagram of a communication method according to this application;
FIG. 9 is a diagram of a communication apparatus according to this application;
FIG. 10 is another diagram of a communication apparatus according to this application; and
FIG. 11 is another diagram of a communication apparatus according to this application.

### DESCRIPTION OF EMBODIMENTS

The following describes technical solutions of this application with reference to the accompanying drawings of this application. All other solutions obtained by a person skilled in the art based on this application without creative efforts shall fall within the protection scope of this application.

The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in this application are used to distinguish between a plurality of objects, but are not used to limit a sequence, a time sequence, priorities, or importance of the plurality of objects.

This application may be applied to various possible communication systems. For example, this application may be applied to a long term evolution (long term evolution, LTE) system, a new radio (new radio, NR) system, an open access network (open RAN, O-RAN or ORAN), a cloud radio access network (cloud radio access network, CRAN), or a new radio vehicle-to-everything (NR vehicle-to-everything, NR V2X) system. This application may alternatively be applied to a system in which a plurality of access technologies are used for hybrid networking. This application may alternatively be applied to a device-to-device (device-to-device, D2D) communication system, a machine-to-machine (machine-to-machine, M2M) communication system, an internet of things (internet of things, IoT), or an uncrewed aerial vehicle communication system. In addition, this application may alternatively be applied to a non-terrestrial communication system, for example, a satellite communication system or a high-altitude communication platform.

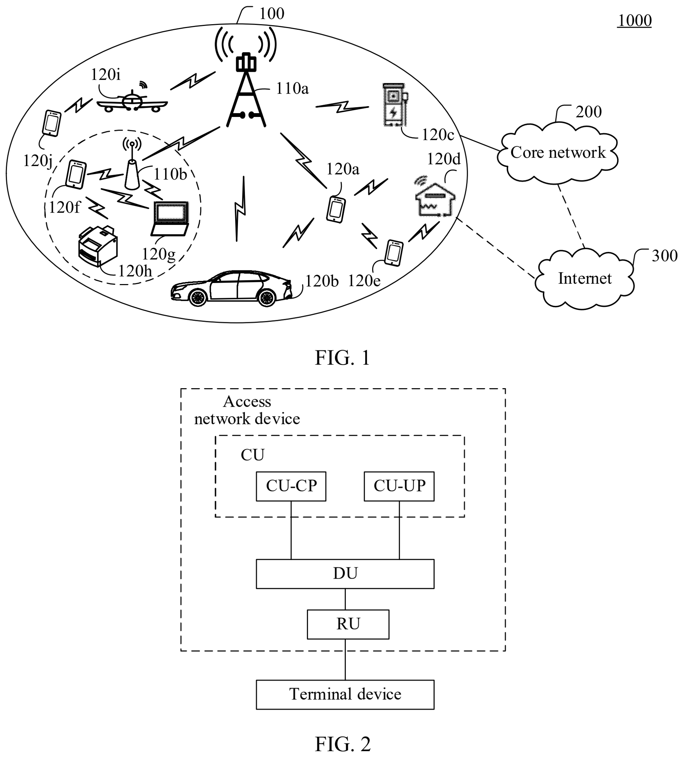

FIG. 1 is a diagram of a possible and non-limiting application scenario according to this application. The solutions provided in this application may be applied to a communication system 1000 shown in FIG. 1. In the communication system, common devices participating in communication include a terminal device and a network device. The following first separately describes the two types of devices.

In the communication system, the terminal device may be a wireless terminal device that can receive scheduling and indication information of the network device. The wireless terminal device may be a device that provides a user with voice and/or data connectivity, or a handheld device having a wireless connection function, or another processing device connected to a wireless modem. In some implementations, the terminal device may communicate with one or more core networks or an internet through a radio access network (radio access network, RAN). The terminal device may also be referred to as a terminal, user equipment (user equipment, UE), a mobile station, a mobile terminal, or the like. The terminal device may be widely applied to various scenarios, for example, device-to-device (device-to-device, D2D), vehicle-to-everything (vehicle-to-everything, V2X) communication, machine-type communication (machine-type communication, MTC), an internet of things (internet of things, IoT), ultra-reliable low-latency communication (ultra-reliable low-latency communication, URLLC), virtual reality, augmented reality, industrial control, self-driving, telemedicine, a smart grid, smart furniture, a smart office, a smart wearable device, smart transportation, a smart city, or satellite communication. The terminal may be a mobile phone, a tablet computer, a computer having a wireless transceiver function, a wearable device, a vehicle, an uncrewed aerial vehicle, a helicopter, an airplane, a hot air balloon, a ship, a robot, a mechanical arm, a smart home device, or the like. A device form of the terminal is not limited in embodiments of this application.

In this application, an apparatus configured to implement a function of the terminal device may be a terminal device, or may be an apparatus that can support the terminal device in implementing the function, for example, a processor, a circuit, a chip, or a chip system. The apparatus may be installed in the terminal device or connected to the terminal device for use. In the technical solutions provided in this application, an example in which the apparatus configured to implement the function of the terminal device is the terminal device is used for describing the technical solutions provided in this application.

In the communication system, the network device may be a device in a wireless network. For example, the network device may be a radio access network (radio access network, RAN) node (or device) that connects the terminal device to the wireless network. In some implementations, the network device may further include a satellite, an aircraft, and the like. In addition, in another possible case, the network device may be another apparatus providing a wireless communication function for the terminal device. A specific technology and a specific device form that are used by the network device are not limited in this application. For ease of description, this is not limited in this application.

In this application, an apparatus configured to implement a function of the network device may be a network device, or may be an apparatus that can support the network device in implementing the function, for example, a processor, a circuit, a chip, or a chip system. The apparatus may be installed in the network device or connected to the network device for use. In the technical solutions provided in this application, an example in which the apparatus configured to implement the function of the network device is the network device is used for describing the technical solutions provided in this application.

Optionally, the network device may further include a core network device. The core network device includes, for example, an access and mobility management function (access and mobility management function, AMF), a user plane function (user plane function, UPF), or a session management function (session management function, SMF).

As shown in FIG. 1, the communication system 1000 includes a radio access network (radio access network, RAN) 100 and a core network 200. The RAN 100 may include at least one RAN device (for example, 110a and 110b in FIG. 1, collectively referred to as 110). The RAN 100 may further include at least one terminal (for example, 120a to 120j in FIG. 1, collectively referred to as 120). The terminal 120a to the terminal 120j are connected to the RAN device 110 in a wireless manner. The RAN 100 may further include another RAN device, for example, a wireless relay device and/or a wireless backhaul device (not shown in FIG. 1). The access network device 110 is connected to the core network 200 in a wireless or wired manner. A core network device in the core network and the access network device in the radio access network may be different physical devices, or may be a same physical device that integrates a logical function of the core network and a logical function of the radio access network. The terminals may be connected to each other in a wireless manner. Access network devices may be connected to each other in a wired or wireless manner. FIG. 1 is merely a diagram for illustration. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an open access network (open RAN, O-RAN or ORAN) or a cloud radio access network (cloud radio access network, CRAN). Alternatively, the RAN 100 may be a communication system that integrates the foregoing two or more systems.

The RAN device 110 may also be sometimes referred to as a RAN node, a RAN entity, an access node, or the like, and forms a part of the communication system, to help a terminal implement radio access. The plurality of RAN nodes 110 in the communication system 1000 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for a base station 110a, the network element 120i is a terminal. Both the RAN node 110 and the terminal 120 are sometimes referred to as communication apparatuses. For example, a network element 110a and a network element 110b in FIG. 1 may be understood as communication apparatuses having a base station function, and a network element 120a to a network element 120j may be understood as communication apparatuses having a terminal function.

In a possible scenario, the access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle-mounted device, or the like. For example, an access network device in a vehicle-to-everything (vehicle-to-everything, V2X) technology may be a roadside unit (roadside unit, RSU). A plurality of access network devices in the communication system may be base stations of a same type, or may be base stations of different types. The base station may communicate with the terminal, or may communicate with the terminal through a relay station. The terminal may communicate with a plurality of base stations in different access technologies.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in radio equipment or a radio frequency unit, for example, included in a remote radio unit (remote radio unit, RRU), an active antenna module (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of a software module and a hardware module. The CU (or the CU-CP and the CU-UP), the DU, and the RU can implement different protocol layer functions.

Communication between the access network device and the terminal device may comply with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

In an implementation example, FIG. 2 is a diagram of an access network device. The network device includes one or more CUs, one or more DUs, and one or more radio units (radio units, RUs). For clarity, FIG. 2 shows only one CU, one DU, and one RU. The CU is configured to connect to a core network and the one or more DUs. Optionally, the CU may have some functions of the core network. The CU may include a CU-CP and a CU-UP. The CU and the DU may be configured based on protocol layer functions of a wireless network that are implemented by the CU and the DU. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, functions of a protocol layer above the PDCP layer are set on the CU, and functions of a protocol layer below the PDCP layer are set on the DU. This is not limited. The foregoing configuration of the CU and the DU is merely an example. Alternatively, functions of the CU and the DU may be configured as required. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on latency. Functions whose processing time needs to meet a requirement of small latency are set on the DU, and functions whose processing time does not need to meet the requirement of the latency are set on the CU.

Further, the DU and the RU may cooperate to jointly implement functions of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include some of functions of the physical layer, and the some functions are closer to the MAC layer. The lower-layer functions of the physical layer may include the other functions of the physical layer, and the other functions are closer to an intermediate radio frequency side. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT)/inverse fast Fourier transform (inverse fast Fourier transform, IFFT), beamforming, extraction and filtering of a physical random access channel (physical random access channel, PRACH), or the like. The RU may perform radio frequency signal communication with the terminal device through an air interface. A precoding function of the PHY layer may be in the DU or the RU. There may be various possible manners of splitting the DU and the RU. This is not limited.

There is an interface between the DU and the RU. For example, the interface may be referred to as a fronthaul (fronthaul, FH) interface. In a possible implementation, the DU is located in the BBU, the RU is located in the RRU/AAU/RRH, and an interface between the BBU and the RRU/AAU/RRH may also be referred to as a fronthaul interface. To implement the fronthaul interface, the BBU and the RRU/AAU/RRH may be connected through a fronthaul network, or the DU and the RU may be connected through a fronthaul network. For example, the fronthaul network includes but is not limited to a fiber direct connection and a wavelength division network. In addition, based on different splitting manners, the interface between the DU and the RU may alternatively be a common public radio interface (common public radio interface, CPRI) or an enhanced common public radio interface (enhanced common public radio interface, eCPRI).

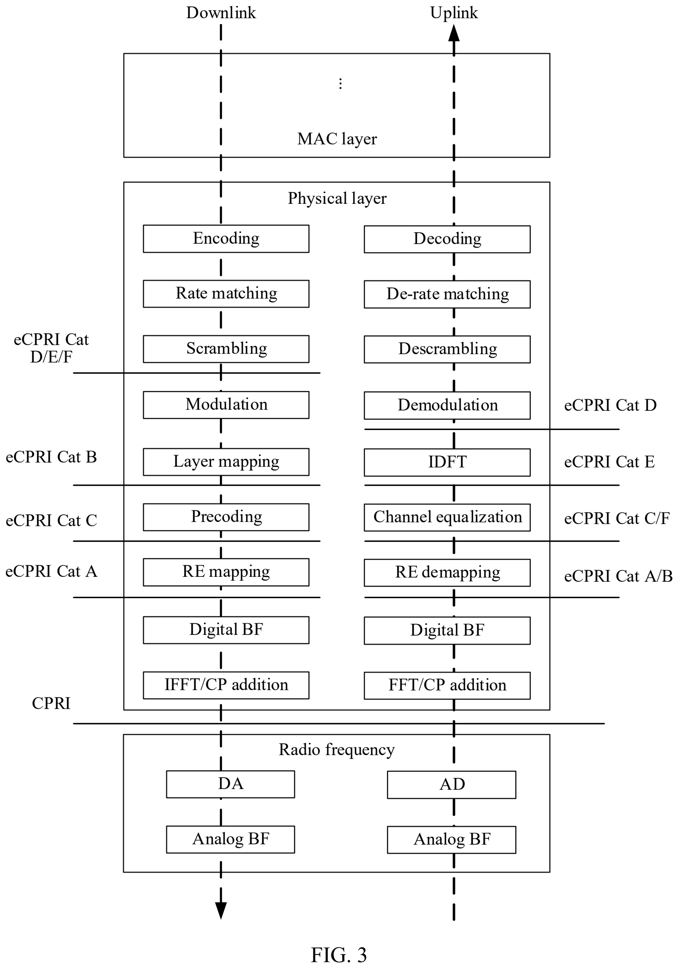

FIG. 3 is a diagram of an access network device. A MAC layer function, a physical layer function (namely, a PHY layer function), and a radio frequency function of the access network device are separately shown in a downlink direction and an uplink direction, to implement signal processing.

As shown in FIG. 3, the physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast Fourier transform, IFFT)/cyclic prefix (cyclic prefix, CP) addition, decoding, de-rate matching, descrambling, demodulation, inverse discrete Fourier transform (inverse discrete Fourier transform, IDFT), channel equalization (or channel estimation), RE demapping, digital BF, fast Fourier transform (fast Fourier transform, FFT)/CP removal, digital-to-analog (digital-to-analog, DA) conversion, analog BF, analog-to-digital (analog-to-digital, AD) conversion, or analog BF.

The one or more functional modules may be implemented by software, hardware, or a combination of software and hardware. Physically, the functional modules may be discrete or integrated. It may be understood that, the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) according to a design, or does not include a specific functional module shown in FIG. 3 (for example, not include a digital BF module).

The access network device may support fronthaul interfaces of one or more categories, and different fronthaul interfaces respectively correspond to DUs and RUs that have different functions. As shown in FIG. 3, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, in comparison with the CPRI, some downlink and/or uplink baseband functions are offloaded from the DU to the RU for implementation. Different manners of splitting the DU and the RU correspond to eCPRIs of different categories (categories, Cat for short). FIG. 3 shows six examples of eCPRIs, which are represented by Cat A, Cat B, Cat C, Cat D, Cat E, and Cat F (which may also be represented as Option A to Option F, or Option 1 to Option 6, or in another manner). It may be understood that there may be another manner of splitting the DU and the RU, that is, there may be an eCPRI of another category.

eCPRI Cat A is used as an example. For downlink transmission, based on layer mapping for splitting, the DU is configured to implement RE mapping and one or more functions before the RE mapping (where "before" in the downlink transmission is understood as a processing function above the eCPRI Cat A interface, that is, one or more of encoding, rate matching, scrambling, modulation, layer mapping, precoding, and the RE mapping). Another function after the RE mapping (where "after" in the downlink transmission is understood as a processing function below the eCPRI Cat A interface, that is, one or both of digital BF or IFFT/CP addition) is moved to the RU for implementation.

eCPRI Cat A is still used as an example. For uplink transmission, based on RE demapping for splitting, the DU is configured to implement demapping and one or more functions after the demapping (where "after" in the uplink transmission is understood as a processing function above the eCPRI Cat A interface, that is, one or more functions of decoding, de-rate matching, descrambling, demodulation, IDFT, channel equalization, and the RE demapping). Another function before the demapping (where "before" in the uplink transmission is understood as a processing function below the eCPRI Cat A interface, that is, one or both of digital BF or FFT/CP removal) are moved to the RU for implementation.

Similarly, eCPRI Cat B, eCPRI Cat C, eCPRI Cat D, eCPRI Cat E, and eCPRI Cat F respectively correspond to different manners of splitting the DU and the RU. A splitting point and a function before the splitting point are implemented by the DU, and a function after the splitting point is implemented by the RU. For splitting points for eCPRIs of various categories, refer to FIG. 3. Details are not described. For example, for eCPRI Cat B, layer mapping is used for splitting for downlink transmission, and RE demapping is used for splitting for uplink transmission. For the uplink transmission, the RE mapping and a function before the RE mapping are implemented by the DU, and a function after the RE mapping and the radio frequency function are implemented by the RU. For the downlink transmission, the layer mapping and a function before the layer mapping are implemented by the DU, and a function after the layer mapping and the radio frequency function are implemented by the RU.

Splitting manners for the eCPRIs may be symmetric in an uplink and a downlink, for example, for eCPRI Cat A and eCPRI Cat C shown in FIG. 3. Alternatively, splitting manners for the eCPRIs may be asymmetric in an uplink and a downlink, for example, for eCPRI Cat B, eCPRI Cat D, eCPRI Cat E, and eCPRI Cat F shown in FIG. 3. This is not limited. Optionally, in the uplink and/or the downlink, different splitting manners may be configured for different channels or different channel groups, that is, eCPRIs of different categories are configured. One group of channels may include one or more channels.

In a possible design, the access network device may include a plurality of device forms. For example, the access network device may include a combination of the BBU and the RRU, a combination of the BBU and the AAU, or a combination of the BBU and the RRH. In the access network device, a processing module mainly configured to implement the baseband function may be referred to as the BBU. In the access network device, a processing module mainly configured to implement the radio frequency function may be referred to as the RRU/AAU/RRH.

Optionally, all baseband functions of the access network device may be integrated into the BBU for implementation; or some baseband functions of the access network device are set in the BBU for implementation, and other baseband functions are set in the RRU/AAU/RRH for implementation. For example, an example in which the baseband function includes the physical layer function in FIG. 3 is used. In eCPRI Cat A, some baseband functions that are set in the BBU in the downlink direction may include one or more of encoding, rate matching, scrambling, modulation, layer mapping, precoding, and RE mapping, and some baseband functions that are set in the RRU/AAU/RRH in the downlink direction may include one or more of digital BF or IFFT/CP addition. In other words, the DU mentioned above may be located in the BBU, and the RU mentioned above may be located in the RRU/AAU/RRH.

In a possible design, when some baseband functions of the access network device are set in the BBU for implementation, and other baseband functions are set in the RRU/AAU/RRH for implementation, a processing module configured to implement the baseband function in the BBU is referred to as a baseband high (baseband high, BBH) unit, and a processing module configured to implement the baseband function in the RRU/AAU/RRH is referred to as a baseband low (baseband low, BBL) unit. A first unit and a second unit in this application may be different BBL units.

Optionally, the first unit (and/or the second unit) may further have another name. For example, the first unit (and/or the second unit) may have a radio frequency signal processing function, and the first unit (and/or the second unit) may be understood as a network device having a radio frequency signal processing function, that is, the first unit (and/or the second unit) may be referred to as a radio frequency unit, radio equipment (radio equipment, RE), a remote radio unit (remote radio unit, RRU), an active antenna processing module (active antenna unit, AAU), or a radio unit (radio unit, RU). In addition, the first unit (and/or the second unit) can be connected to a network device having a baseband signal processing function. The network device having the baseband signal processing function may be referred to as a baseband unit, a radio equipment controller (radio equipment controller, REC), a building baseband processing module (building baseband unit, BBU), a distributed unit (distributed unit, DU), or the like.

In an implementation example, an example in which the first unit and the second unit are different BBL units, and the network device that is connected to the first unit and the second unit and that has the baseband signal processing function is the DU is used. A link between the BBL unit and the DU may be referred to as a fronthaul link, a fronthaul network, or the like. A communication interface between the BBL unit and the DU unit may be referred to as a common public radio interface (common public radio interface, CPRI), an enhanced common public radio interface (enhanced common public radio interface, eCPRI), a fronthaul interface in an open access network (open radio access network, ORAN or O-RAN), or another interface name. This is not limited herein.

Optionally, the first unit and the second unit may be connected to a same distributed unit (distributed unit, DU), or may be connected to different DUs.

In addition, there may be a plurality of implementations of communication connections between the first unit and the second unit in this application. The following provides descriptions with reference to some accompanying drawings.

It should be noted that, the first unit may correspond to one or more cells, and the second unit may also correspond to one or more cells. In the following example, at least one coordinating cell of a first terminal device corresponds to the first unit, and a serving cell of the first terminal device corresponds to the second unit. Optionally, the first terminal device may correspond to a plurality of coordinating cells. The plurality of coordinating cells may include only the at least one coordinating cell, or the plurality of coordinating cells may include the at least one coordinating cell and another coordinating cell. In the following example, an example in which one or more coordinating cells in the another coordinating cell correspond to a third unit is used.

Implementation 1: The first unit and the second unit (and another unit that may exist, for example, a third unit) may be connected in a cascading manner, so that different units can communicate with each other in the cascading manner.

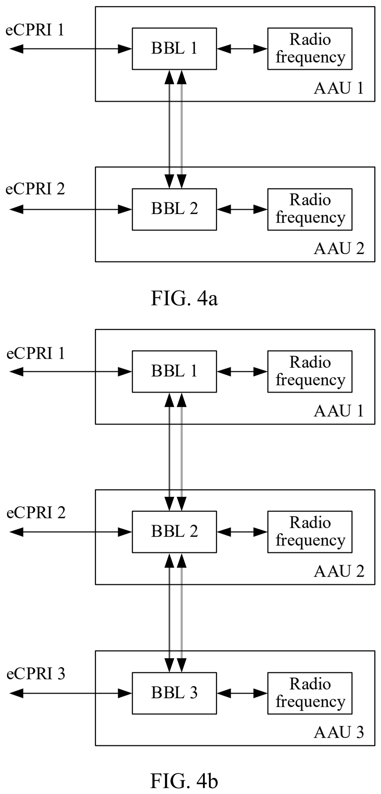

In an implementation example, as shown in FIG. 4a, the first unit may be a BBL 1 or an AAU 1 in the figure, and the second unit may be a BBL 2 or an AAU 2 in the figure. In FIG. 4a, the first unit may be connected to the DU through an eCPRI 1 interface shown by a single-line arrow, and the second unit may be connected to the DU through an eCPRI 2 interface shown by a single-line arrow. In addition, the first unit and the second unit may communicate with each other through a link between the BBL 1 and the BBL 2 that is shown by a double-line arrow, for example, exchange, through the link, first data mentioned below.

In another implementation example, as shown in FIG. 4b, the first unit may be a BBL 1 or an AAU 1 in the figure, the second unit may be a BBL 2 or an AAU 2 in the figure, and the third unit may be a BBL 3 or an AAU 3 in the figure. In FIG. 4b, the first unit may be connected to the DU through an eCPRI 1 interface shown by a single-line arrow, the second unit may be connected to the DU through an eCPRI 2 interface shown by a single-line arrow, and the third unit may be connected to the DU through an eCPRI 3 interface shown by a single-line arrow. In addition, the first unit and the second unit may communicate with each other through a link between the BBL 1 and the BBL 2 that is shown by a double-line arrow, for example, exchange, through the link, first data mentioned below.

It may be understood that, in FIG. 4b, the second unit and the third unit may communicate with each other through a link between the BBL 2 and the BBL 3 that is shown by a double-line arrow, and the first unit and the third unit may communicate, through forwarding by the BBL 2, with each other on the link between the BBL 1 and the BBL 2 and the link between the BBL 2 and the BBL 3.

Implementation 2: In the first unit, the second unit, and another unit that may exist, different units may be connected to each other through a switch, so that the different units can communicate with each other through routing and forwarding by the switch.

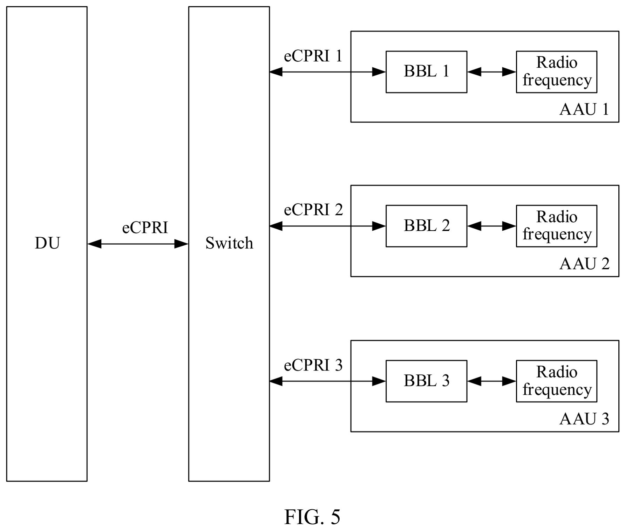

In an implementation example, as shown in FIG. 5, the first unit may be a BBL 1 or an AAU 1 in the figure, the second unit may be a BBL 2 or an AAU 2 in the figure, and the third unit may be a BBL 3 or an AAU 3 in the figure. In FIG. 5, the first unit may be connected to the switch through an eCPRI 1 interface shown by a single-line arrow, the second unit may be connected to the switch through an eCPRI 2 interface shown by a single-line arrow, and the third unit may be connected to the switch through an eCPRI 3 interface shown by a single-line arrow, so that each unit may communicate with the DU through an eCPRI interface between the switch and the DU. In addition, the first unit and the second unit may communicate with each other based on forwarding by the switch through the eCPRI 1 interface and the eCPRI 2 interface, for example, exchange first data mentioned below through forwarding by the switch.

It may be understood that, in FIG. 5, the second unit and the third unit may also communicate with each other through forwarding by the switch, and the first unit and the third unit may also communicate with each other through forwarding by the switch.

It may be understood that, in FIG. 4a/FIG. 4b/FIG. 5, a radio frequency module located inside the AAU or the RU is configured to perform a radio frequency signal processing process. For example, the radio frequency signal processing process may include processing such as AD/DA/analog BF.

Optionally, in FIG. 5, a data format of communication between the first unit, the second unit, or another unit that may exist and the switch may be an Ethernet format. Optionally, in FIG. 4a/FIG. 4b, when communication is not performed through the switch, a data format of communication between different units (for example, any two or more units in the first unit, the second unit, the distributed unit, or the another unit that may exist) may be the Ethernet format, a CPRI format, a CPRI-like format, a private format, or the like.

Optionally, in FIG. 5, the switch may be replaced with a physical device/virtual device having a routing function, for example, a router, a virtual machine, or a container.

In the communication system, a network device (for example, any network device shown in FIG. 1 to FIG. 3) and a terminal device (for example, any terminal device shown in FIG. 1 or FIG. 2) may be used as different communication nodes to perform communication in a wireless communication manner. One network device may include one or more cells. When the terminal device is located in a signal coverage area of two or more cells, the two or more cells may perform coordinative processing on a signal of the terminal device, to obtain a signal gain (for example, a signal combining gain and/or a signal diversity gain).

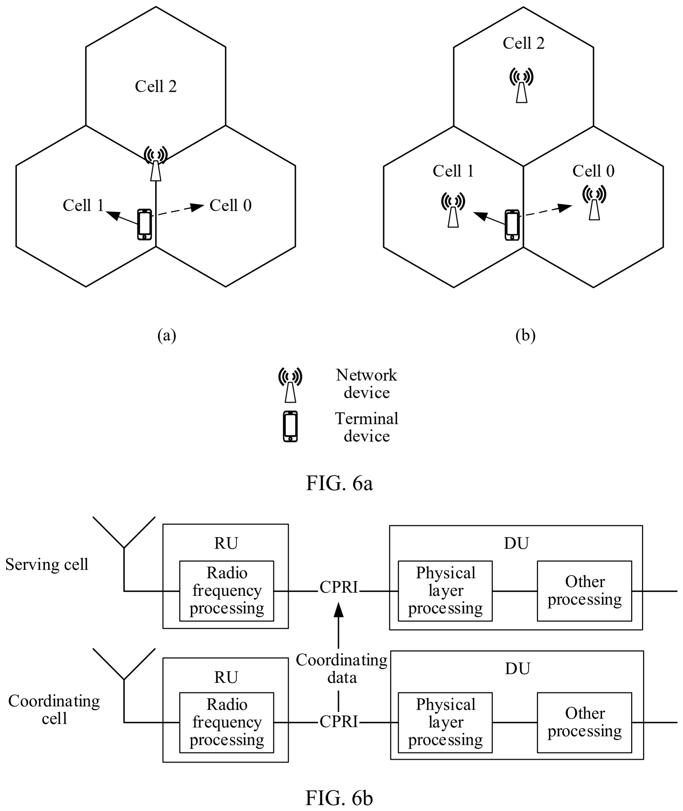

With reference to implementation examples shown in FIG. 6a and FIG. 6b, the following provides example descriptions of a process in which two or more cells perform coordinative processing on uplink data of the terminal device.

As shown in a part (a) in FIG. 6a, the network device may be a directional site. To be specific, the network device may receive and send signals of different cells in a specified direction, for example, a cell 0 (Cell 0), a cell 1 (Cell 1), and a cell 2 (Cell 2) in the figure. When the terminal device is located on a cell edge of the cell 1, an uplink signal of the terminal device may be received by two cells and jointly demodulated, to obtain a signal combining gain.

As shown in a part (b) in FIG. 6a, the network device may be an omnidirectional site. To be specific, the network device may receive and send signals of a same cell in different directions, for example, a cell 0 (Cell 0), a cell 1 (Cell 1), and a cell 2 (Cell 2) in the figure. When the terminal device is located on a cell edge of the cell 1, an uplink signal of the terminal device may be received by two cells (namely, the cell 1 and the cell 0) and jointly demodulated, to obtain a signal combining gain.

In FIG. 6a, a solid-line arrow in the figure represents a communication link of a serving cell, and a dashed-line arrow represents a communication link of a coordinating cell. To be specific, the serving cell of the terminal device is the cell 1, and the coordinating cell of the terminal device is the cell 0.

In FIG. 6b, an example in which the serving cell and the coordinating cell each have an independent radio frequency processing module (where the radio frequency processing module may be configured to perform radio frequency signal processing, for example, processing such as the DA, the AD, and the analog BF shown in FIG. 3) is used. In FIG. 6b, the radio frequency processing module may be the RU, and a physical layer processing module and other processing that may exist (for example, the MAC layer processing and the RLC layer processing) may be located in the DU.

For the coordinating cell in FIG. 6b, after the coordinating cell receives the uplink data of the terminal device, the coordinating cell may send, to the serving cell through the CPRI interface, coordinating data obtained by processing the uplink data by the radio frequency module. That is, the coordinating data is data on which physical layer processing is not performed. In other words, in a coordinative processing process, the coordinating cell does not need to perform the physical layer processing and the other processing that may exist (for example, the MAC layer processing and the RLC layer processing) on the uplink data of the terminal device.

For the serving cell in FIG. 6b, the serving cell receives two parts of data of the terminal device. One part of data is the uplink data of the terminal device that is received by the radio frequency module in the serving cell, and the other part of data is coordinating data from one or more coordinating cells that is received by the serving cell through the CPRI interface. In other words, a DU of the serving cell may receive coordinating data from an RU of the coordinating cell through the CPRI interface. Then, the DU of the serving cell may perform, by using an uplink coordination algorithm, the coordination processing process in a physical layer processing process based on the two parts of data, to obtain a signal combining gain.

In other words, in the implementation examples shown in FIG. 6a and FIG. 6b, a processing basis for the serving cell to perform uplink coordinative processing includes: The DU receives data from the radio frequency processing module of the serving cell through the CPRI interface, and the DU receives coordinating data from the radio frequency processing module of the coordinating cell through the CPRI interface. In addition, because the physical layer processing is located in the DU, an uplink coordinative processing process is performed by the DU.

In addition, in the communication system, the network device may be deployed in a distributed manner. Some functional entities are carried on a specific device and the other functional entities are carried on another device, to improve a coverage capability and deployment flexibility of the network device. When a functional entity for processing signals in the network device is split, a functional entity for physical layer processing in FIG. 6b may be split through the eCPRI interface shown in FIG. 3. To be specific, the physical layer processing module in the coordinating cell may be split into a BBH module and a BBL module, and the BBH module and the BBL module separately perform different physical layer processing processes. The BBL module and the radio frequency module may be disposed on a same device (for example, the RRU/AAU/RRH). To be specific, a signal of the coordinating cell is processed through one RRU/AAU/RRH having the BBL module and the radio frequency module, and a signal of the serving cell is processed through another RRU/AAU/RRH having the BBL module and the radio frequency module.

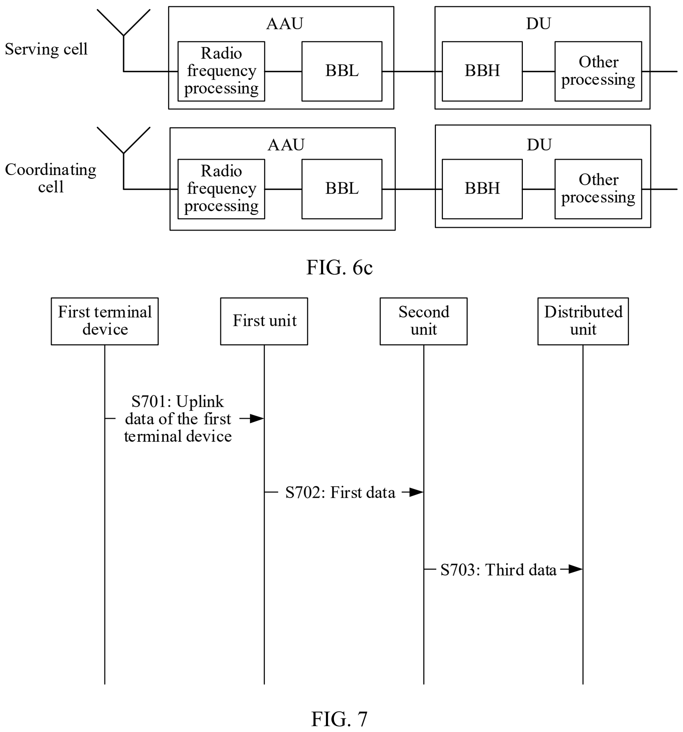

For example, as shown in FIG. 6c, an example in which the physical layer processing module shown in FIG. 6b is split into the BBL module and the BBH module is used. The serving cell and the coordinating cell each may have the AAU and the DU. The AAU includes the radio frequency processing module and the BBL module. The DU includes the BBH module and another processing module. The another processing module may be configured to perform MAC layer processing, RLC layer processing, and the like. However, in FIG. 6c, an uplink coordinative processing process in the serving cell may be performed through the BBL module. In other words, the uplink coordinative processing process in the serving cell may not be performed by the DU. As a result, after the AAU of the coordinating cell sends the coordinating data to the DU of the serving cell, because the DU of the serving cell no longer has an uplink coordinative processing function, the DU of the serving cell discards or ignores the coordinating data, and therefore uplink coordination cannot be performed.

Therefore, after the network device performs functional entity division in different function division manners, how to perform coordinative processing on the signal of the terminal device is an urgent technical problem to be resolved.

To resolve the foregoing problem, this application provides a communication method and a device, to implement coordinative processing on uplink data of a first terminal device. FIG. 7 is a diagram of a communication method according to this application. The method includes the following steps.

S701: A first terminal device sends uplink data of the first terminal device to a first unit, and correspondingly, the first unit receives the uplink data of the first terminal device.

At least one coordinating cell of the first terminal device corresponds to the first unit, and a serving cell of the first terminal device corresponds to a second unit. It may also be understood that, the at least one coordinating cell of the first terminal device is located in the first unit, and the serving cell of the first terminal device is located in the second unit. In other words, the at least one coordinating cell of the first terminal device is provided by the first unit, and the serving cell of the first terminal device is provided by the second unit.

S702: The first unit sends first data to the second unit, and correspondingly, the second unit receives the first data.

In step S702, the first unit may send the first data to the second unit through a link between the first unit and the second unit, where the first data is data obtained by performing first physical layer processing on the uplink data of the first terminal device.

It should be understood that, in this application, the first unit may be a network device that has at least the first physical layer processing, and the first unit may further have another physical layer processing (for example, second physical layer processing mentioned below) function. Similarly, the second unit may be a network device that has at least the second physical layer processing, and the second unit may further have another physical layer processing (for example, first physical layer processing) function.

In addition, before the first physical layer processing is performed on the data, radio frequency signal processing is further performed on the data. For example, the radio frequency signal processing may include one or more of analog (beamforming, BF) processing and analog-to-digital (analog-to-digital, AD) conversion processing. The radio frequency signal processing may be performed by the first unit, or may be performed by a module of a radio frequency signal processing function independent of the first unit. This is not limited in this application. For example, the first unit may be an AAU or an RRU.

In a possible implementation, the first physical layer processing may include at least one of fast Fourier transform (fast Fourier transform, FFT) processing and cyclic prefix (cyclic prefix, CP) removal processing. The first physical layer processing performed by the first unit on the uplink data may specifically include at least one of the foregoing, so that the second unit does not need to perform the foregoing FFT processing and/or CP removal processing. In addition, when the first unit communicates with a distributed unit through an eCPRI interface, some baseband functions in the distributed unit are delivered to the first unit, so that the first unit has a first physical layer processing function. Therefore, the first unit may perform the first physical layer processing on the uplink data of the first terminal device, so that the eCPRI interface between the first unit and the distributed unit can be reused in the foregoing technical solution.

In a possible implementation, the first physical layer processing does not include digital beamforming processing. Specifically, through the digital beamforming processing, data having an antenna feature can be processed into data having a beam feature. Data received by the module of the radio frequency signal processing function through an air interface may be referred to as antenna-level data. In addition, based on a spatial correlation of the antenna-level data, through the digital beamforming processing, the antenna-level data is centralized onto some beams in beam domain to obtain beam-level data. In other words, through the digital beamforming processing, the antenna-level data can be processed into the beam-level data. However, compared with the beam-level data, the antenna-level data has more signal features. In an interference rejection combining technology, as shown in FIG. 6c, when an uplink coordinative processing process in a serving cell is performed by a BBL module, because compared with the beam-level data, the antenna-level data has more signal features, the BBL module may perform the uplink coordinative processing process by using the antenna-level data. For example, coordinative processing performed based on an uplink coordination algorithm may be performed after FFT/CP removal processing in the BBL module and before AD processing, or may be performed before a digital BF and before FFT/CP removal processing. Therefore, a signal sent by the coordinating cell to the serving cell should be the antenna-level data. However, when a fronthaul interface is the eCPRI interface, the coordinating cell sends the beam-level data to the serving cell. Compared with the antenna-level data, the beam-level data loses many signal features. Therefore, the interference rejection combining technology cannot be reused. However, in an implementation provided in this application, when the first unit corresponding to the coordinating cell performs the first physical layer processing that does not include the digital beamforming on the uplink data, the first unit sends the antenna-level data instead of the beam-level data to the second unit, so that when the fronthaul interface is the eCPRI interface, the second unit corresponding to the serving cell can perform uplink coordinative processing based on the antenna-level data including more signal features. In this way, the interference rejection combining technology is reused, and performance of the uplink coordinative processing can be improved.

In a possible implementation, before step S701, the method may further include: The first unit receives first information, where the first information includes at least one of an identifier of the at least one coordinating cell, an identifier of the serving cell, and first indication information, and the first indication information indicates that a type of the at least one coordinating cell is a coordinating cell. Specifically, the first unit may further receive the first information, so that the first unit can determine, based on the first information, information about a coordinating group to which the at least one coordinating cell and the serving cell belong, and subsequently can communicate with the first terminal device/second unit based on the information about the coordinating group.

Optionally, for the first unit, the first information may be received through a direct link between the first unit and a DU connected to the first unit, or the first information may be received through a link of another device between the first unit and a DU connected to the first unit. The another device may be another unit (for example, the second unit or a third unit that appears below), a switch, or the like.

In a possible implementation, before that the first unit sends the first data in step S701, the method may further include: The first unit sends the first information through the link between the first unit and the second unit. Specifically, after the first unit receives the first information, the first unit sends the first information to the second unit through the link between the first unit and the second unit, so that the second unit can determine information about the coordinating cell in the first unit based on the first information, and subsequently the second unit can communicate with the first unit based on the information about the coordinating cell.

It should be noted that, in a process of performing coordinative processing on uplink data of a terminal device, the terminal device may correspond to one serving cell and several coordinating cells, the serving cell corresponds to the second unit, and at least one of the several coordinating cells corresponds to the first unit. Optionally, the several coordinating cells may include only the at least one coordinating cell, or the several coordinating cells may include the at least one coordinating cell, or may include another coordinating cell. Correspondingly, the first unit may further send the first information to another unit in which the another coordinating cell is located. The another unit can determine the information about the coordinating cell in the first unit based on the first information, and subsequently can communicate with the first unit based on the information about the coordinating cell.

In a possible implementation, the second unit may also perform a similar implementation process in which the first unit receives and sends the first information. Before that the second unit receives the first data in step S701, the method may further include: The second unit receives second information, where the second information includes at least one of an identifier of a coordinating cell of the first terminal device, the identifier of the serving cell, and second indication information, and the second indication information indicates that a cell coordination type of the serving cell is a serving cell. Specifically, the second unit may further receive the second information, so that the second unit can determine, based on the second information, information about a coordinating group to which the at least one coordinating cell and the serving cell belong, and subsequently can communicate with the first terminal device/first unit based on the information about the coordinating group.

Optionally, for the second unit, the second information may be received through a direct link between the second unit and a DU connected to the second unit, or the second information may be received through a link of another device between the second unit and a DU connected to the second unit. The another device may be another unit (for example, the first unit or a third unit that appears below), a switch, or the like.

In a possible implementation, the first information (and/or the second information) may further include information about the another coordinating cell. Specifically, the first information received by the first unit (and/or the second information received by the second unit) may include information about the at least one coordinating cell in the first unit and information about the serving cell, and may further include information about another coordinating cell in another unit other than the first unit and the second unit. In this way, when there is no direct communication link between the first unit and the second unit, the first unit and the second unit can communicate with each other through forwarding by a unit in which the another coordinating cell is located.

Optionally, the information about the another coordinating cell may include an identifier of the another coordinating cell, a coordination type of the another coordinating cell, a communication address of the another coordinating cell, a communication address of a unit in which the another coordinating cell is located, and the like.

In a possible implementation, in the method shown in FIG. 7, the method may further include: The first unit sends or receives a negotiation message on the link between the first unit and the second unit (or between the first unit and the another unit), where the negotiation message includes at least one of capability information, vendor information, security check information, and encryption information. Similarly, the second unit may also send or receive the negotiation message. Specifically, the first unit and the second unit (or the another unit) may further exchange the negotiation message, so that different units can perform negotiation based on the negotiation message, to improve communication efficiency or improve communication security.

Optionally, the information in the negotiation message is preconfigured in the first unit or the second unit or the another unit (for example, the third unit that may exist).

In a possible implementation, before that the first unit sends the first data in step S701, the method may further include: The first unit sends third information on a link between the first unit and a distributed unit, where the third information includes an identifier of the first unit and/or a communication address of the first unit. Specifically, the first unit may further send the third information to the distributed unit on the link between the first unit and the distributed unit, where the third information includes the identifier of the first unit and/or the communication address of the first unit, so that the distributed unit can communicate with the first unit based on the third information. For example, the distributed unit can determine or plan coordinating cell group information based on the third information and other information that may exist (for example, information indicating a network service range of the first unit, information indicating an identifier and/or a communication address of the another unit, and information indicating a network service range of the another unit), or the distributed unit can release/announce the third information to the another unit.

It may be understood that, an identifier of a unit (for example, the first unit or the second unit) identifies the unit. For example, the identifier of the unit may include an identity of the unit, a device identifier of the unit, or a device identification code of the unit. Similarly, a communication address of a unit (for example, the first unit or the second unit) is used by the another device to communicate with the unit. For example, the communication address of the unit may include an internet protocol (internet protocol, IP) address or a media access control (media access control, MAC) address of the unit.

Optionally, for the second unit, the second unit may learn of the identifier of the first unit and/or the communication address of the first unit in a plurality of manners. For example, after the distributed unit learns of the third information through the foregoing process, the distributed unit may send the third information to the second unit based on the identifier of the first unit and/or the communication address of the first unit. For another example, the first unit sends the third information to the second unit through the link between the first unit and the second unit. For another example, in the second information sent by the DU to the second unit, the second information may also include an identifier and/or a communication address of a unit corresponding to the coordinating cell of the first terminal device, where the unit corresponding to the coordinating cell of the first terminal device includes at least the first unit.

In a possible implementation, the second unit may also perform a similar implementation process in which the first unit receives and sends the third information. Before that the second unit receives the first data in step S702, the method may further include: The second unit sends fourth information on a link between the second unit and the distributed unit, where the fourth information indicates communication information of the second unit, and the communication information includes an identifier of the second unit and/or a communication address of the second unit. Specifically, the second unit may further send the fourth information to the distributed unit on the link between the second unit and the distributed unit, where the fourth information includes the identifier of the second unit and/or the communication address of the second unit, so that the distributed unit can perform communication based on the fourth information. For example, the distributed unit can determine or plan coordinating cell group information based on the fourth information, or the distributed unit can release/announce the fourth information to the another unit.

Optionally, for the first unit, the first unit may learn of the identifier of the second unit and/or the communication address of the second unit in a plurality of manners. For example, after the distributed unit learns of the fourth information through the foregoing process, the distributed unit may send the fourth information to the first unit based on the identifier of the second unit and/or the communication address of the second unit. For another example, the second unit sends the fourth information to the first unit through the link between the first unit and the second unit. For another example, in the first information sent by the DU to the first unit, the first information may also include an identifier and/or a communication address of a unit corresponding to the coordinating cell of the first terminal device, where the unit corresponding to the coordinating cell of the first terminal device includes at least the second unit.

Optionally, the third information or the fourth information may be preconfigured in the distributed unit and/or the another unit (for example, the second unit and the third unit that may appear below), so that the first unit and the second unit can obtain the third information or the fourth information without using an indication of the distributed unit, to reduce overheads and reduce communication latency.

S703: The second unit sends third data, and correspondingly, the distributed unit receives the third data.

The third data is obtained by performing second physical layer processing on the first data.

It should be noted that, the second unit is used as a unit in which the serving cell of the first terminal device is located. Before step S703, in a process in which the second unit determines the third data based on the first data, the second unit may also receive the uplink data of the first terminal device, so that the second unit may perform uplink coordinative processing based on the first data and the uplink data of the first terminal device that is received by the second unit. A result of the uplink coordinative processing may include the third data, and further, the second unit sends the third data to the distributed unit in step S703.

Optionally, when all coordinating cells of the first terminal device correspond to the first unit, the second unit may perform the uplink coordinative processing based on the first data and the uplink data of the first terminal device that is received by the second unit, to obtain the third data. When there are a plurality of coordinating cells in the first terminal device, at least one of the plurality of coordinating cells corresponds to the first unit, and further, the another coordinating cell may correspond to the another unit (for example, the third unit), the second unit may further receive other data from the third unit (where for a process in which the third unit determines the other data, refer to the process in which the first unit determines the first data), so that the second unit may perform the uplink coordinative processing based on the first data, the other data, and the uplink data of the first terminal device that is received by the second unit, to obtain the third data.

Optionally, a process in which the second unit performs the uplink coordinative processing may be implemented based on a plurality of algorithms, for example, a joint interference rejection combining (joint interference rejection combining, JIRC) algorithm and a soft combination (soft combination, SC) algorithm. This is not limited herein.

In a possible implementation, the second physical layer processing performed by the second unit on the first data may include digital beamforming processing. The second physical layer processing may further include at least one of the following in addition to the digital beamforming processing: decoding, de-rate matching, descrambling, demodulation, inverse discrete Fourier transform, channel equalization, and resource element demapping. Specifically, through the digital beamforming processing, data having an antenna feature can be processed into data having a beam feature, that is, through the digital beamforming processing, antenna-level data can be processed into beam-level data. Compared with the beam-level data, the antenna-level data has more signal features. When the second physical layer processing includes the digital beamforming processing, the second unit can perform uplink coordinative processing based on the antenna-level data having more signal features, to improve performance of the uplink coordinative processing.

Based on the technical solution shown in FIG. 7, the first unit is a unit in which the at least one coordinating cell of the first terminal device is located, and the second unit is a unit in which the serving cell of the first terminal device is located. After the first unit receives the uplink data of the first terminal device, the first unit may send the first data to the second unit on the link between the first unit and the second unit. Therefore, after the network device performs functional entity division in different function division manners, when some physical layer processing (for example, first physical layer processing) functions in the network device are set in the first unit (and/or the second unit), the first data sent by the first unit to the second unit through the link between the first unit and the second unit is data obtained by performing the first physical layer processing on the uplink data of the first terminal device, that is, the first data is used as coordinating data. In the foregoing implementation solution, transmission of the coordinating data between the first unit and the second unit is enabled. The second unit may subsequently perform other physical layer processing based on the first data, to implement the uplink coordinative processing of the first terminal device.

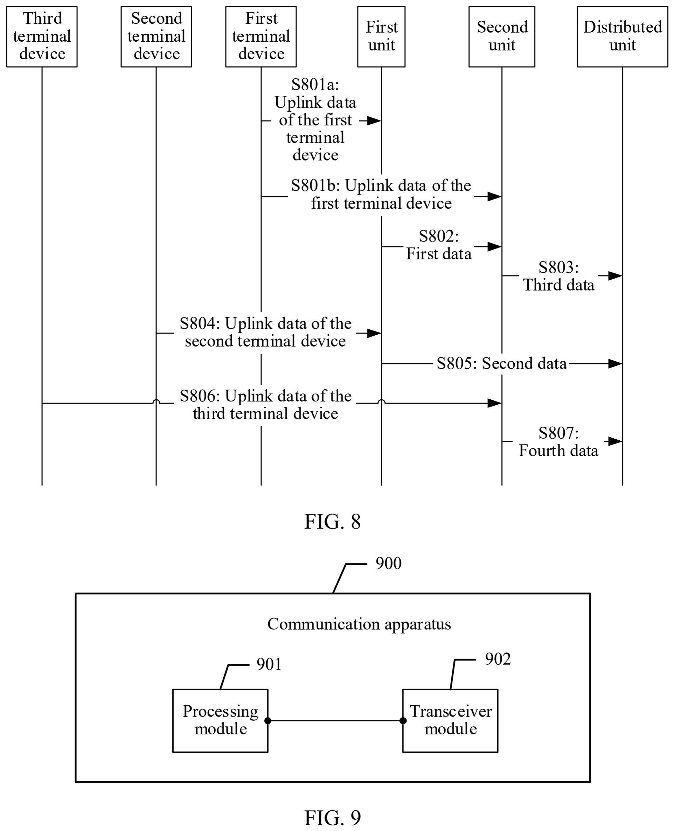

In a possible implementation in the method shown in FIG. 7, because one network device may serve a plurality of terminal devices, that is, the network device may receive and send signals of the plurality of terminal devices, the following provides descriptions with reference to an implementation example shown in FIG. 8.

For the first terminal device, the first unit may be the unit in which the coordinating cell of the first terminal device is located, and the second unit may be the unit in which the serving cell of the first terminal device is located. As shown in step S703, for a processing process of the uplink data of the first terminal device, the second unit may also receive the uplink data of the first terminal device. In FIG. 8, the processing process of the uplink data of the first terminal device is shown in the following step S801a, step S801b, step S802, and step S803.

S801a: The first terminal device sends the uplink data of the first terminal device, and correspondingly, the first unit receives the uplink data of the first terminal device.

S801b: The first terminal device sends the uplink data of the first terminal device, and correspondingly, the second unit receives the uplink data of the first terminal device.

It should be noted that, the first terminal device may perform a sending action once in step S801a and step S801b, or the first terminal device may separately perform a sending action in step S801a and step S801b, so that the first unit and the second unit separately receive the uplink data of the first terminal device. This is not limited herein.

S802: The first unit sends the first data, and correspondingly, the second unit receives the first data.

S803: The second unit sends the third data, and correspondingly, the distributed unit receives the third data.

Specifically, as shown in FIG. 8, a processing process of the uplink data of the first terminal device may include the following steps: The first terminal device sends the uplink data of the first terminal device, and correspondingly, the first unit receives the uplink data of the first terminal device in step S801a, and the second unit receives the uplink data of the first terminal device in step S801b. Then, the first unit performs the first physical layer processing based on the uplink data of the first terminal device in this step, to obtain the first data, and sends the first data to the second unit in step S802. Subsequently, the second unit may perform the uplink coordinative processing based on the uplink data of the first terminal device in step S801b and the first data in step S802, to obtain the third data and send the third data in step S803, so as to implement the uplink coordinative processing of the first terminal device.

It should be understood that, in FIG. 8, for an exchange process of the uplink data, the first data, and the third data of the first terminal device, refer to the foregoing descriptions in FIG. 7. Details are not described herein again.

For a second terminal device, the first unit may be a unit in which a serving cell of the second terminal device is located, and an example in which the second terminal device does not include the coordinating cell is used for description in this example. In FIG. 8, a processing process of uplink data of the second terminal device is shown in the following step S804 and step S805.

S804: The second terminal device sends the uplink data of the second terminal device, and correspondingly, the first unit receives the uplink data of the second terminal device.

S805: The first unit sends the second data, and correspondingly, the distributed unit receives the second data.

Specifically, as shown in FIG. 8, a processing process of the uplink data of the second terminal device may include the following steps: The first unit receives the uplink data of the second terminal device in step S804. On the link between the first unit and the distributed unit, the first unit sends the second data in step S805. The second data is data obtained by performing the first physical layer processing and the second physical layer processing on the uplink data of the second terminal device, and the second physical layer processing includes the digital beamforming processing. For the second physical layer processing, refer to the descriptions in FIG. 7. Specifically, the first unit may include coordinating cells in which some terminal devices (for example, the first terminal device) are located, or may include serving cells in which some terminal devices (for example, the second terminal device) are located. Correspondingly, different from a process in which the first unit processes the uplink data of the first terminal device, after the first unit receives the uplink data of the second terminal device, the first unit may send, to the distributed unit, the data obtained by performing the first physical layer processing and the second physical layer processing on the uplink data of the second terminal device.

For a third terminal device, the second unit may be a unit in which a serving cell of the third terminal device is located, and in this example, an example in which the third terminal device does not include a coordinating cell is used for description. In FIG. 8, a processing process of the uplink data of the second terminal device is shown in the following step S806 and step S807.

S806: The third terminal device sends uplink data of the third terminal device, and correspondingly, the second unit receives the uplink data of the third terminal device.

S807: The second unit sends fourth data, and correspondingly, the distributed unit receives the fourth data.

Similarly, for S806 and S807, refer to the descriptions of S804 and S805. Details are not described again.

It should be noted that, the foregoing implementation process is mainly described from a perspective of a coordinative processing process of uplink data. In actual application, the foregoing implementation process may be applied to a coordinative processing process of downlink data. For the coordinative processing process of the downlink data, refer to the foregoing descriptions. Details are not described herein again.

To implement functions in the method provided in this application, the devices that perform the foregoing method may include a hardware structure and/or a software module, and implement the functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

Refer to FIG. 9. This application provides a communication apparatus 900. The apparatus 900 includes a processing module 901 and a transceiver module 902.

In an implementation example, the communication apparatus 900 may implement a function of the first unit in the foregoing method, and therefore can also implement beneficial effects of the foregoing method. In this application, the communication apparatus 900 may be the first unit, or may be a software module, an integrated circuit, a component, or the like in the first unit, for example, a chip. This is not limited. The following uses an example in which the communication apparatus 900 is the first unit for description.

Specifically, the transceiver module 902 is configured to receive uplink data of a first terminal device, where at least one coordinating cell of the first terminal device corresponds to (or is located in) the first unit, and a serving cell of the first terminal device corresponds to (or is located in) a second unit. The processing module 901 is configured to determine first data. The transceiver module 902 is further configured to send the first data through a link between the first unit and the second unit, where the first data is data obtained by performing first physical layer processing on the uplink data of the first terminal device.

In a possible implementation, the first physical layer processing includes at least one of fast Fourier transform processing and cyclic prefix removal processing.

In a possible implementation, the first physical layer processing does not include digital beamforming processing.

In a possible implementation, the transceiver module 902 is further configured to receive first information, where the first information includes at least one of an identifier of the at least one coordinating cell, an identifier of the serving cell, and first indication information, and the first indication information indicates that a cell coordination type of the at least one coordinating cell is a coordinating cell.

In a possible implementation, the first information further includes information about another coordinating cell.

In a possible implementation, the transceiver module 902 is further configured to send the first information through the link between the first unit and the second unit.

In a possible implementation, the transceiver module 902 is further configured to receive second information through the link between the first unit and the second unit, where the second information includes at least one of an identifier of a coordinating cell of the first terminal device, the identifier of the serving cell, and second indication information, and the second indication information indicates that a cell coordination type of the serving cell is a serving cell.

In a possible implementation, the transceiver module 902 is further configured to send or receive a negotiation message through the link between the first unit and the second unit, where the negotiation message includes at least one of capability information, vendor information, security check information, and encryption information.

In a possible implementation, the transceiver module 902 is further configured to send third information through a link between the first unit and a distributed unit, where the third information includes an identifier of the first unit and/or a communication address of the first unit.

In a possible implementation, the transceiver module 902 is further configured to receive fourth information through the link between the first unit and the distributed unit, where the fourth information includes an identifier of the second unit and/or a communication address of the second unit.

In a possible implementation, the first unit and the second unit are connected in a cascading manner.

In a possible implementation, the first unit and the second unit are connected through a switch, and the switch is configured to forward data on which first physical layer processing is performed.

In a possible implementation, the transceiver module 902 is further configured to receive uplink data of a second terminal device, where a serving cell of the second terminal device corresponds to (or is located in) the first unit; and the transceiver module 902 is further configured to send second data through the link between the first unit and the distributed unit, where the second data is data obtained by performing the first physical layer processing and second physical layer processing on the uplink data of the second terminal device, and the second physical layer processing includes digital beamforming processing.

In another implementation example, the communication apparatus 900 may implement a function of the second unit in the foregoing method, and therefore can also implement beneficial effects of the foregoing method. In this application, the communication apparatus 900 may be the second unit, or may be a software module, an integrated circuit, a component, or the like in the second unit, for example, a chip. This is not limited. The following uses an example in which the communication apparatus 900 is the second unit for description.

Specifically, the transceiver module 902 is configured to receive first data through a link between a first unit and a second unit, where the first data is data obtained by performing first physical layer processing on uplink data of a first terminal device, where at least one coordinating cell of the first terminal device corresponds to (or is located in) the first unit, and a serving cell of the first terminal device corresponds to (or is located in) the second unit. The processing module 901 is configured to determine third data. The transceiver module 902 is further configured to send the third data to a distributed unit, where the third data is obtained by performing second physical layer processing on the first data.

In a possible implementation, the second physical layer processing includes digital beamforming processing; or the second physical layer processing includes digital beamforming processing and at least one of the following: decoding, de-rate matching, descrambling, demodulation, inverse discrete Fourier transform, channel equalization, and resource element demapping.

In a possible implementation, the first physical layer processing includes at least one of fast Fourier transform processing and cyclic prefix removal processing.

In a possible implementation, the first physical layer processing does not include the digital beamforming processing.

In a possible implementation, the transceiver module 902 is further configured to receive first information through the link between the first unit and the second unit, where the first information includes at least one of an identifier of the at least one coordinating cell, an identifier of the serving cell, and first indication information, and the first indication information indicates that a cell coordination type of the at least one coordinating cell is a coordinating cell.

In a possible implementation, the first information further includes information about another coordinating cell.

In a possible implementation, the transceiver module 902 is further configured to receive second information, where the second information includes at least one of an identifier of a coordinating cell of the first terminal device, the identifier of the serving cell, and second indication information, and the second indication information indicates that a cell coordination type of the serving cell is a serving cell.

In a possible implementation, the transceiver module 902 is further configured to send the second information through the link between the first unit and the second unit.

In a possible implementation, the transceiver module 902 is further configured to send or receive a negotiation message through the link between the first unit and the second unit, where the negotiation message includes at least one of capability information, vendor information, security check information, and encryption information.

In a possible implementation, the transceiver module 902 is further configured to send fourth information through a link between the second unit and the distributed unit, where the fourth information indicates communication information of the second unit, and the communication information includes an identifier of the second unit and/or a communication address of the second unit.

In a possible implementation, the transceiver module 902 is further configured to receive third information through the link between the first unit and the second unit, where the third information includes an identifier of the first unit and/or a communication address of the first unit.

In a possible implementation, the first unit and the second unit are connected in a cascading manner.

In a possible implementation, the first unit and the second unit are connected through a switch, and the switch is configured to forward data on which first physical layer processing is performed.

In a possible implementation, the transceiver module 902 is further configured to receive uplink data of a third terminal device; and the transceiver module 902 is further configured to send fourth data through the link between the second unit and the distributed unit, where the fourth data is data obtained by performing the first physical layer processing and the second physical layer processing on the uplink data of the third terminal device.

It should be noted that for content such as an information execution process of the units in the communication apparatus 900, specifically refer to the descriptions of the foregoing method in this application. Details are not described herein again.

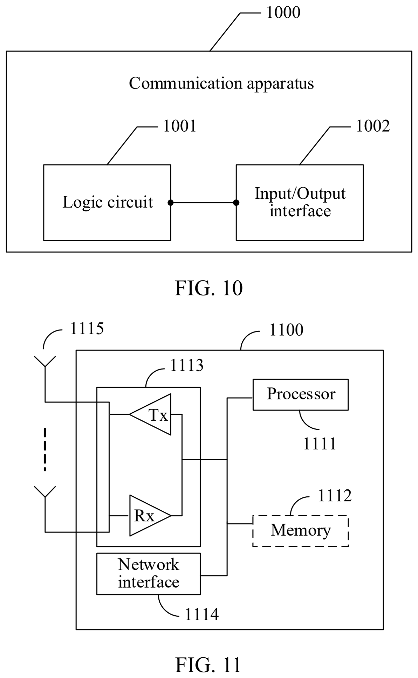

FIG. 10 is another diagram of a structure of a communication apparatus 1000 according to this application. The communication apparatus 1000 includes at least a logic circuit 1001. The communication apparatus 1000 may be a chip or an integrated circuit.

Optionally, the communication apparatus further includes an input/output interface 1002.

The transceiver module 902 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, the input/output interface 1002 is configured to receive uplink data of a first terminal device, where at least one coordinating cell of the first terminal device corresponds to (or is located in) the first unit, and a serving cell of the first terminal device corresponds to (or is located in) a second unit. The logic circuit 1001 is configured to determine first data. The input/output interface 1002 is further configured to send the first data through a link between the first unit and the second unit, where the first data is data obtained by performing first physical layer processing on the uplink data of the first terminal device. It should be understood that the logic circuit 1001 and the input/output interface 1002 may further perform another step performed by the first unit in any one of the foregoing examples, and implement corresponding beneficial effects. Details are not described herein again.

Optionally, the input/output interface 1002 is configured to receive first data through a link between a first unit and a second unit, where the first data is data obtained by performing first physical layer processing on uplink data of a first terminal device, where at least one coordinating cell of the first terminal device corresponds to (or is located in) the first unit, and a serving cell of the first terminal device corresponds to (or is located in) the second unit. The logic circuit 1001 is configured to determine third data. The input/output interface 1002 is further configured to send the third data to a distributed unit, where the third data is obtained by performing second physical layer processing on the first data. It should be understood that the logic circuit 1001 and the input/output interface 1002 may further perform another step performed by the second unit in any one of the foregoing examples, and implement corresponding beneficial effects. Details are not described herein again.

In a possible implementation, the processing module 901 shown in FIG. 9 may be the logic circuit 1001 in FIG. 10.

Optionally, the logic circuit 1001 may be a processing apparatus, and some or all of functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate arrays, FPGAs), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip, or any combination of the foregoing chips or processors.

FIG. 11 is a diagram of a structure of a communication apparatus 1100 in the foregoing examples according to this application. The communication apparatus 1100 may be specifically a communication apparatus used as a first unit or a second unit in the foregoing examples. For a structure of the communication apparatus, refer to the structure shown in FIG. 11.

The communication apparatus 1100 includes at least one processor 1111 and at least one network interface 1114.

Further, optionally, the communication apparatus further includes at least one memory 1112, at least one transceiver 1113, and one or more antennas 1115. The processor 1111, the memory 1112, the transceiver 1113, and the network interface 1114 are connected, for example, connected via a bus. In this application, the connection may include various types of interfaces, transmission lines, buses, or the like. This is not limited in this application. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing the actions described in the foregoing implementation processes. The communication apparatus may include a baseband processor and a central processing unit. The baseband processor is mainly configured to process the communication protocol and the communication data. The central processing unit is mainly configured to control an entire terminal device, execute the software program, and process the data of the software program. The processor 1111 in FIG. 11 may integrate functions of the baseband processor and the central processing unit. A person skilled in the art may understand that the baseband processor and the central processing unit may be processors independent of each other, and are interconnected by using a technology, for example, a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in embodiments of this application, and the processor 1111 controls the execution. Various types of executed computer program code may also be considered as a driver of the processor 1111.

FIG. 11 shows only one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 performs further processing, for example, demodulation and decoding, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing processing and analog-to-digital conversion processing on the radio frequency signal, to obtain the digital baseband signal or the digital intermediate frequency signal. A sequence of the down frequency mixing processing and the analog-to-digital conversion processing is adjustable. The transmitter Tx may selectively perform one-level or multi-level up frequency mixing processing and digital-to-analog conversion processing on the modulated digital baseband signal or digital intermediate frequency signal, to obtain the radio frequency signal. A sequence of the up frequency mixing processing and the digital-to-analog conversion processing is adjustable. The digital baseband signal and the digital intermediate frequency signal may be collectively referred to as a digital signal.

The transceiver 1113 may also be referred to as a transceiver module, a transceiver machine, a transceiver apparatus, or the like. Optionally, a component that is in the transceiver module and that is configured to implement a receiving function may be considered as a receiving unit, and a component that is in the transceiver module and that is configured to implement a sending function may be considered as a sending unit. In other words, the transceiver module includes the receiving unit and the sending unit. The receiving unit may also be referred to as a receiver, an input port, a receiving circuit, or the like. The sending unit may be referred to as a transmitter, a transmitter machine, a transmitter circuit, or the like.

It should be noted that the communication apparatus 1100 shown in FIG. 11 may be specifically configured to implement the steps implemented by the first unit or the second unit in the foregoing methods, and implement the technical effects corresponding to the first unit or the second unit. For a specific implementation of the communication apparatus 1100 shown in FIG. 11, refer to the descriptions in the foregoing methods. Details are not described herein again.

Division into modules in this application is an example, is merely logical function division, and may be other division during actual implementation. In addition, functional modules in this application may be integrated into one processor, or may exist alone physically, or two or more modules are integrated into one module. The integrated module may be implemented in a form of hardware, or may be implemented in a form of a software functional module.

All or some of the technical solutions provided in this application may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, comprising:
receiving uplink data of a first terminal device, wherein at least one coordinating cell of the first terminal device corresponds to a first unit, and a serving cell of the first terminal device corresponds to a second unit; and
sending first data through a link between the first unit and the second unit, wherein the first data is data obtained by performing first physical layer processing on the uplink data of the first terminal device.

2. The method according to claim 1, wherein the first physical layer processing comprises at least one of fast Fourier transform processing and cyclic prefix removal processing.

3. The method according to claim 1 or 2, wherein the first physical layer processing does not comprise digital beamforming processing.

4. The method according to any one of claims 1 to 3, wherein before the sending the first data, the method further comprises:
receiving first information, wherein the first information comprises at least one of an identifier of the at least one coordinating cell, an identifier of the serving cell, and first indication information, and the first indication information indicates that a cell coordination type of the at least one coordinating cell is a coordinating cell.

5. The method according to claim 4, wherein before the sending the first data, the method further comprises:
sending the first information to the second unit through the link between the first unit and the second unit.

6. The method according to any one of claims 1 to 5, wherein before the sending the first data, the method further comprises:
receiving second information through the link between the first unit and the second unit, wherein the second information comprises at least one of an identifier of a coordinating cell of the first terminal device, the identifier of the serving cell, and second indication information, and the second indication information indicates that a cell coordination type of the serving cell is a serving cell.

7. The method according to any one of claims 1 to 6, wherein the method further comprises:
sending or receiving a negotiation message through the link between the first unit and the second unit, wherein the negotiation message comprises at least one of capability information, vendor information, security check information, and encryption information.

8. The method according to any one of claims 1 to 7, wherein before the sending the first data, the method further comprises:
sending third information through a link between the first unit and a distributed unit, wherein the third information comprises an identifier of the first unit and/or a communication address of the first unit.

9. The method according to any one of claims 1 to 8, wherein before the sending the first data, the method further comprises:
receiving fourth information through the link between the first unit and the distributed unit, wherein the fourth information comprises an identifier of the second unit and/or a communication address of the second unit.

10. The method according to any one of claims 1 to 9, wherein
the first unit and the second unit are connected in a cascading manner.

11. The method according to any one of claims 1 to 9, wherein the first unit and the second unit are connected through a switch, and the switch is configured to forward the first data.

12. A communication method, comprising:
receiving first data through a link between a first unit and a second unit, wherein the first data is data obtained by performing first physical layer processing on uplink data of a first terminal device, wherein at least one coordinating cell of the first terminal device corresponds to the first unit, and a serving cell of the first terminal device corresponds to the second unit; and
sending third data to a distributed unit, wherein the third data is obtained by performing second physical layer processing on the first data.

13. The method according to claim 12, wherein the second physical layer processing comprises digital beamforming processing; and
the second physical layer processing further comprises at least one of the following:
decoding, de-rate matching, descrambling, demodulation, inverse discrete Fourier transform, channel equalization, and resource element demapping.

14. The method according to claim 12 or 13, wherein the first physical layer processing comprises at least one of fast Fourier transform processing and cyclic prefix removal processing.

15. The method according to any one of claims 12 to 14, wherein the first physical layer processing does not comprise the digital beamforming processing.

16. The method according to any one of claims 12 to 15, wherein before the receiving the first data, the method further comprises:
receiving first information through the link between the first unit and the second unit, wherein the first information comprises at least one of an identifier of the at least one coordinating cell, an identifier of the serving cell, and first indication information, and the first indication information indicates that a cell coordination type of the at least one coordinating cell is a coordinating cell.

17. The method according to any one of claims 12 to 16, wherein before the receiving the first data, the method further comprises:
receiving second information, wherein the second information comprises at least one of an identifier of a coordinating cell of the first terminal device, the identifier of the serving cell, and second indication information, and the second indication information indicates that a cell coordination type of the serving cell is a serving cell.

18. The method according to claim 17, wherein before the receiving the first data, the method further comprises:
sending the second information through the link between the first unit and the second unit.

19. The method according to any one of claims 12 to 18, wherein the method further comprises:
sending or receiving a negotiation message through the link between the first unit and the second unit, wherein the negotiation message comprises at least one of capability information, vendor information, security check information, and encryption information.

20. The method according to any one of claims 12 to 19, wherein before the receiving the first data, the method further comprises:
sending fourth information through a link between the second unit and the distributed unit, wherein the fourth information indicates communication information of the second unit, and the communication information comprises an identifier of the second unit and/or a communication address of the second unit.

21. The method according to any one of claims 12 to 20, wherein before the receiving the first data, the method further comprises:
receiving third information through the link between the first unit and the second unit, wherein the third information comprises an identifier of the first unit and/or a communication address of the first unit.

22. The method according to any one of claims 12 to 21, wherein the first unit and the second unit are connected in a cascading manner.

23. The method according to any one of claims 12 to 21, wherein the first unit and the second unit are connected through a switch, and the switch is configured to forward the first data.

24. A communication system, comprising a first unit and a second unit, wherein
the first unit is configured to perform the method according to any one of claims 1 to 11, and the second unit is configured to perform the method according to any one of claims 12 to 23.

25. The system according to claim 24, wherein the system further comprises a switch, the first unit and the second unit are connected through the switch, and the switch is configured to forward first data.

26. The system according to claim 24 or 25, wherein the system further comprises a distributed unit.

27. A communication apparatus, comprising a unit configured to perform the method according to any one of claims 1 to 11, or comprising a unit configured to perform the method according to any one of claims 12 to 23.

28. A computer-readable storage medium, wherein the medium stores instructions; and when the instructions are executed by a computer, the method according to any one of claims 1 to 23 is implemented.

29. A computer program product, comprising instructions, wherein when the instructions are run on a computer, the computer is enabled to perform the method according to any one of claims 1 to 23.
